(19) Europäisches Patentamt European Patent Office Office européen des brevets

(11) **EP 4 095 570 A1**

(12) **EUROPEAN PATENT APPLICATION**

(43) Date of publication:
**30.11.2022 Bulletin 2022/48**

(21) Application number: **21305698.9**

(22) Date of filing: **27.05.2021**

(51) International Patent Classification (IPC):
**G02B 1/115** (2015.01)     **G02B 5/22** (2006.01)
**G02C 7/10** (2006.01)

(52) Cooperative Patent Classification (CPC):
**G02B 1/115; G02B 5/22; G02C 7/108**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ESSILOR INTERNATIONAL
94220 Charenton-Le-Pont (FR)**

(72) Inventor: **DING, Xingzhao
120425 Singapore (SG)**

(74) Representative: **Korakis-Ménager, Sophie
Essilor International
Propriété Intellectuelle
147, rue de Paris
94220 Charenton-le-Pont (FR)**

(54) **OPTICAL LENS HAVING AN ASYMMETRIC MIRROR**

(57)     An optical article having a base material defining a front and a rear main faces, at least one main face being coated with an interferential multilayer coating comprising a stack of at least one high refractive index layer having a refractive index higher than 1.55 and at least one low refractive index layer having a refractive index of 1.55 or less, the refractive indexes being expressed for a wavelength of 550 nm, such as defining high reflective properties when viewing said article from its front face and antireflective properties when viewing said article from its rear face, called asymmetric mirror, at least one of the layers of the asymmetric mirror being a visible light absorbing sub-stoichiometric inorganic material.

FIG. 4

EP 4 095 570 A1

**Description**

The invention relates to an optical article comprising a base material defining a front and a rear main faces, at least one main face being coated with an interferential multilayer coating defining high reflective properties when viewing said article from its front face and antireflective properties when viewing said article from its rear face, called asymmetric mirror, and a method of manufacture thereof.

More precisely, the invention relates to an optical article having a mirror coating defining a reflective surface on the lens to make the eyes of the wearer less perceivable by an observer, while avoiding for the wearer's eyes unwanted reflection on said mirror coating of arrays coming towards the rear surface of the mirror, and of a new structure.

EP 3 118 658 discloses an optical article comprising a base material defining a front and a rear main faces, at least one main face being coated with an interferential multilayer coating defining high reflective properties when viewing said article from its front face and antireflective properties when viewing said article from its rear face.

To this end, this document teaches to provide front face of the optical article with an absorptive asymmetric mirror coating which is composed of 1 or 2 absorptive metal layers (Cr, Ta, Nb, Ti or Zr) added in an interferential stack, and its rear face with a conventional and transparent to visible light antireflective coating.

The said metal-containing absorptive asymmetric mirror coatings can have a much lower backward reflection as compared to the high forward reflection, which can effectively reduce the light coming from rear face of the optical article, transmitted through the substrate and then reflected from the mirror coating on front surface towards the wearer's eyes.

However, because of the very strong light absorption properties of the metal material used, only very thin metal layers of few nanometers thickness shall be used in this optical article to guarantee a minimum of light transmission to the wearer's eyes however such low metal layer thickness to reach is difficult or even impossible to obtain or requires specific method and/or is not easily controlled.

Therefore, there is an unfulfilled need to easily control in a flexible manner the asymmetric reflection and transmission properties of an asymmetric mirror coating involving conventional method of manufacture.

An objective of the current invention is therefore to provide optical articles comprising an asymmetric mirror coating of flexible and controlled asymmetric reflection and transmission properties that could be obtained with conventional methods of manufacture.

Another aim of this invention is to flexibly control the transmittance of the asymmetric mirror coating in the widest range of performance while involving conventional methods of manufacture.

Another aim of this invention is to provide a process of manufacturing the above defined article, which could be easily integrated into the classical manufacturing chain and would involve materials that are compatible with and that could be easily integrated into common materials used in the constitution of mirror coatings.

The inventors have found that these objectives and needs could be achieved by using a specific combination of layers constitutive of the coating mirror and involving sub-stoichiometric material. This allows in particular to define asymmetric reflection properties to the mirror coating while being manufactured with conventional and proven methods.

Compared to classical asymmetric mirror coatings, inventive asymmetric mirror coatings have flexible asymmetric reflection properties thanks to their conventional and proven methods of manufacture.

Thus, the present invention relates to an optical article having a base material defining a front and a rear main faces, at least one main face being coated with an interferential multilayer coating comprising a stack of at least one high refractive index layer having a refractive index higher than 1.55 and at least one low refractive index layer having a refractive index of 1.55 or less, the refractive indexes being expressed for a wavelength of 550 nm, such as defining high reflective properties when viewing said article from its front face and antireflective properties when viewing said article from its rear face, called asymmetric mirror, at least one of the layers of the asymmetric mirror is a visible light absorbing sub-stoichiometric inorganic material.

The present invention relates also to any one(s) of the following features, considered alone or in combination:

- said light absorbing sub-stoichiometric inorganic material comprises a sub-stoichiometric dielectric oxide or nitride materials with an extinction coefficient above or equal to 0.1,
- said light absorbing sub-stoichiometric inorganic material has a thickness below 200 nm, preferably below 150 nm
- said sub-stoichiometric inorganic material comprises $SiN_x$, where x is a predetermined number lower than 1 or $SiO_x$, where x is a predetermined number lower than 2, or $SiN_xO_y$, where x and y are predetermined numbers such as $x<1-y/2$, and $y<2(1-x)$
- at least one sub-stoichiometric inorganic material has a thickness below 30 nm, preferably below 20 nm, preferably below 15 nm, more preferably below 10 nm and above 4 nm
- at least one of the visible light absorbing layers of the asymmetric mirror is a metal layer having a thickness below 20 nm, preferably below 15 nm, more preferably below 10 nm and above 4 nm
- the metal layer is interposed between two low index layers, or between two high index layers, or between one low index layer and one high index layer of the said interferential coating

- when the interferential coating comprises two successive metal layers, said successive metal layers being separated by one low index layers, or by one high index layer, or by several successive alternating low and high index layers.
- wherein said metal layer contains a metal species being at least one of Al, Cr, Ta, Nb, Ti and Zr
- the front main face is coated with said asymmetric mirror, and the rear main face is coated with an interferential multilayer coating with antireflective properties when viewing said article from its rear face
- said interferential multilayer coating with antireflective properties when viewing said article from its rear face is an antireflective coating.
- said antireflectictive coating comprises at least one layer of light absorbing material comprises a sub-stoichiometric inorganic material, preferably sub-stoichiometric dielectric oxide or nitride materials, comprising preferably SiNx, where x is a predetermined number lower than 1 or SiOx, where x is a predetermined number lower than 2, or SiNxOy, where x and y are predetermined numbers such as x<1-y/2, and y<2(1-x).
- The optical article according to the invention, comprises:

  ○ a weighted spectral reflection average over the whole visible spectrum between 380-780 nm for light arriving on the front main face, called forward reflectance Rf, at incident angles lower than 15° that is above 2.5%,
  ○ and a weighted spectral reflection average over the whole visible spectrum between 380-780 nm for light arriving on the rear main face, called backward reflectance Rb, at incident angles lower than 15°, below 2.5%, preferably below 2%, preferably below 1.5%, preferably below 1%, preferably below 0.7%, preferably below 0.6%, preferably below 0.5%, preferably below 0.4%, preferably below 0.3%, preferably below 0.2%,
  ○ and the ratio between the forward reflectance and the backward reflectance at an incident angle of 15° noted Rf/Rb is equal or above 10, preferably above 20, preferably above 30

- the backward reflectance Rb at incident angles between 35° and 45°, is below 2.5%, preferably below 2%, preferably below 1.5%, preferably below 1.4%, preferably below 1.3%
- the backward reflectance Rb at incident angles between 0° and 45°, is below 2.5%, preferably below 2.3%, preferably below 2.2%, preferably below 2.1%
- the backward reflectance Rb at incident angles between 35° and 50°, is below 2.5%, preferably below 2.3%, preferably below 2.2%, preferably below 2.1%

The foregoing and other objects, features and advantages of the present invention will become readily apparent to those skilled in the art from a reading of the detailed description hereafter when considered in conjunction with the accompanying drawing, wherein:

- Figure 1 represents a schematic diagram showing total forward and backward reflection of an optical article whose front face is coated with an asymmetric mirror, and its rear face by an antireflective (AR) coating
- Figure 2 depicts reflection curves between 280 and 780 nm taken at an incident angle of 15° of a mirror coating of comparative example 1 (gold reflection color) (a), and the mean light reflection factor of the same comparative example 1 at incident angle comprised between 0° and 50° (b)
- Figure 3, 6, 7, 8, 12a, 12b, 21 depicts the mean light front reflection factor Rf and the mean light back reflection factor Rb at incident angle comprised between 0° and 50° respectively of a first (gold reflection color), third (blue reflection color), fourth (green reflection color), fifth (silver reflection color), sixth, seventh and eighth embodiments of asymmetric mirror coatings according to the invention, while figure 9 depicts the same for an absorptive antireflective coating,

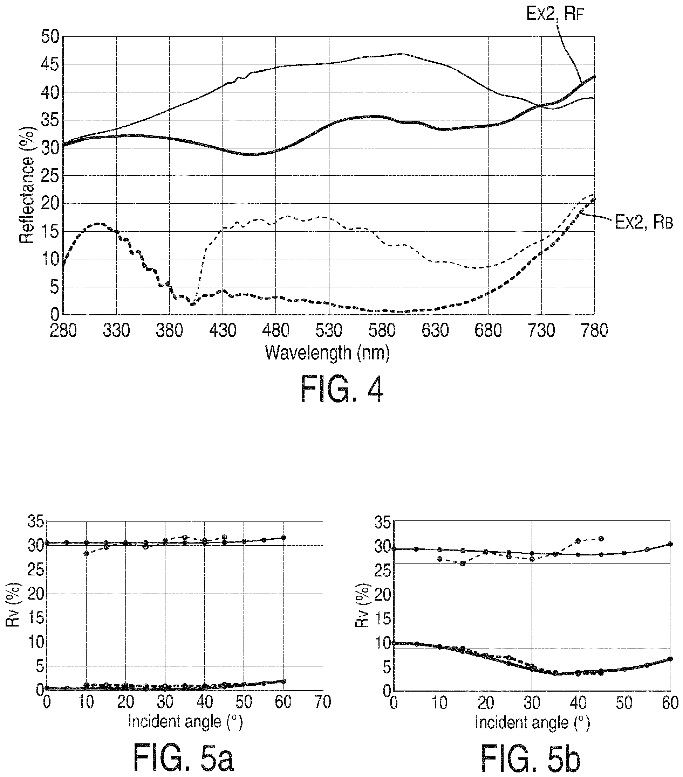

- Figure 4 shows front (Rf) and back (Rb) reflection curves between 280 and 780 nm taken at an incident angle of 15° of an optical article comprising a base material MR8®, on the front face of which an asymmetric mirror coating according to a second embodiment of the invention (Ex 2, silver reflection color) and on the rear face of which a conventional transparent antireflective coating are respectively deposited, and the same (Rf) and back (Rb) reflection curves for a second comparative mirror example 2 deposited on the front surface of a MR8® substrate, the rear surface being coated with the conventional transparent antireflective coating
- Figure 5 represents the mean light reflection factor at incident angles comprised between 0° and 50° of the innovative optical article and comparative example of the figure 4
- Figure 10 depicts reflection curves between 280 and 780 nm taken at an incident angle of 15° of a mirror coating of an optical article comprising a MR8® substrate, on the front face of which an asymmetric mirror coating according to the fifth embodiment of the invention (Ex 5) is deposited, and on the rear face of which an absorptive antireflective coating is deposited (a) and the mean light reflection factor at incident angle comprised between 0° and 50° of the innovative optical article according to this embodiment of the invention (b)
- Figure 11 shows the mean light reflection factor at incident angle comprised between 0° and 45° of the optical article according to the figure 5a (Ex 2/MR8/transparent AR), and the optical article according to the figure 10 (Ex 5/M R8/absorptive AR2)

- Figure 13 is a schematic view illustrating a deposition process of a sub-stoichiometric monolayer used in the asymmetric mirror according to one embodiment of the present invention
- Figure 14 is a set of graphs showing typical transmittance spectra of a plurality of lens substrates provided each with a sub-stoichiometric SiNx monolayer used in the asymmetric mirror according to different embodiments of the present invention
- Figure 15 is a graph showing the measured mean luminous transmission factor Tv for an absorptive SiNx monolayer coating according to a particular embodiment, showing the dependence of Tv on the $N_2$/Ar gas flow rate ratio during deposition
- Figure 16 is a graph showing the variation of Tv for the same SiNx monolayer coating as in Figure 15, as a function of the thickness of such coating, showing the dependence of Tv on the thickness of the coating.
- Figure 17 is a set of graphs showing typical transmittance spectra of a plurality of lens substrates provided each with a sub-stoichiometric SiOx monolayer used in the asymmetric mirror according to different embodiments of the present invention.
- Figure 18 is a graph showing the measured Tv for a SiOx monolayer coating, showing the dependence of Tv on the $O_2$/Ar gas flow rate ratio during deposition.
- Figure 19 is a graph showing the variation of Tv for the same SiOx monolayer coating as in Figure 7, as a function of the thickness of such coating, showing the dependence of Tv on the thickness of the coating
- Figure 20 is a set of two graphs showing the refractive index at 550 nm of light absorptive SiNx and SiOx coatings deposited by magnetron sputtering according to the present disclosure, in a particular embodiment

Detailed description of the invention

**Definitions**

General Definitions

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are openended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about."

When an optical article comprises one or more surface coatings, the phrase "to deposit a coating or layer onto the optical article" means that a coating or layer is deposited onto the outermost coating of the optical article, i.e., the coating which is the closest to the air.

A coating that is "on" a side of a lens is defined as a coating that (a) is positioned over that side, (b) need not be in contact with that side, i.e., one or more intervening coatings may be disposed between that side and the coating in question (although it is preferably in contact with that side) and (c) need not cover that side completely.

The term "coating" is understood to mean any layer, layer stack or film, which may be in contact with the substrate and/or with another coating, for example a sol-gel coating or a coating made of an organic resin. A coating may be deposited or formed through various methods, including wet processing, gaseous processing, and film transfer.

The term "sheet" is understood to mean a single layer (monolayer) or a bilayer, i.e., a set of two layers in direct contact with each other. When a high refractive index sheet (having a refractive index higher than 1.55) has two layers, both layers are high refractive index layers. Similarly, when a low refractive index sheet (having a refractive index lower than or equal to 1.55) has two layers, both layers are low refractive index layers.

In the present application, a layer based on a material is defined as a layer comprising at least 80 % by weight of said material, more preferably at least 90 % by weight of said material, even better consisting of a layer of said material. For example, a $SiO_2$-based or $ZrO_2$-based layer comprises at least 80 % by weight of $SiO_2$ or $ZrO_2$.

Optical article

An optical article according to the disclosure comprises at least one ophthalmic lens or optical filter or optical glass or optical material suitable for human vision, e.g. at least one ophthalmic lens, or optical filter, or optical film each comprising a substrate, or patch intended to be fixed on a substrate, or optical glass, or optical material intended for use in an ophthalmic instrument, for example for determining the visual acuity and/or the refraction of a subject, or any kind of safety device including a safety glass or safety wall intended to face an individual's eye, such as a protective device, for instance safety lenses or a mask or shield.

The optical article may be implemented as eyewear equipment having a frame that surrounds at least partially one or more ophthalmic lenses. By way of non-limiting example, the optical article may be a pair of glasses, sunglasses, safety goggles, sports goggles, a contact lens, an intraocular implant, an active lens with an amplitude modulation such as a polarized lens, or with a phase modulation such as an auto-focus lens, etc.

Herein, the term "lens" means an organic or inorganic glass lens, comprising a lens substrate, which may be coated with one or more coatings of various natures.

The term "ophthalmic lens" is used to mean a lens adapted to a spectacle frame, for example to protect the eye and/or correct the sight. Said lens can be chosen from afocal, unifocal, bifocal, trifocal and progressive lenses. Although ophthalmic optics is a preferred field of the invention, it will be understood that this invention can be applied to optical articles of other types, such as, for example, lenses for optical instruments, in photography or astronomy, optical sighting lenses, ocular visors, optics of lighting systems, safety lenses, etc.

The at least one ophthalmic lens or optical glass or optical material suitable for human vision can provide an optical function to the user i.e. the wearer of the lens.

It can for instance be a corrective lens, namely, a power lens of the spherical, cylindrical and/or addition type for an ametropic user, for treating myopia, hypermetropia, astigmatism and/or presbyopia. The lens can have a constant power, so that it provides power as a single vision lens would do, or it can be a progressive lens having variable power.

Base material/substrate

As used herein, a base material has at least one face, i.e. a surface on one side, coated with an interferential multilayer coating providing asymmetric mirror properties.

Said base material can constitute the substrate of a lens, filter, glass, ophthalmic material etc as cited above, or can constitute the main part of a patch intended to be fixed on such substrate to provide it with asymmetric mirror properties.

The base material or substrate may also have an opposite face coated, i.e. a surface on the other side, also coated, so that, in such a case, two faces of the optical article opposite to one another may be coated.

When the base material constitutes a substrate of an ophthalmic lens, its front face is preferably coated with an asymmetric mirror according to the invention, and its rear face preferably coated with an antireflective coating.

When the base material constitutes the main part of a patch intended to be fixed on a substrate of an ophthalmic lens, its front face is preferably coated with an asymmetric mirror according to the invention, and its rear face will be prepared so as to be fixed on said substrate, that will be provided with an antireflective coating on its rear face

As used herein, the rear face of the base material or the substrate is intended to mean the face which, when using the article, is the nearest from the wearer's eye, in the cases of ophthalmic lenses. It is generally a concave face. On the contrary, the front face of the substrate is the face which, when using the article, is the most distant from the wearer's eye. It is generally a convex face. The optical article can also be a piano article.

Transparent/colored base material/substrate

In the present description, unless otherwise specified, a base material, a substrate, an interferential coating is understood to be transparent when the observation of an image through said optical article is perceived by a wearer and/or an observer without adversely affecting the quality of the image. This definition of the term "transparent" can be applied to all objects qualified as such in the description, unless otherwise specified.

In the present description, unless otherwise specified, a base material, a substrate is understood to be colored by one coloring component (b), which acts as a selective/functional filter.

As used herein, a "selective/functional filter" corresponds to a coloring component which is able to cut at least one band of the visible spectrum through absorption. Indeed, the coloring component (b) is used to color lens substrate therewith, by which a given color vision rectifying spectral characteristic curve is attained by a filtering effect wherein light with a specific wavelength is absorbed to reduce transmissivity of the lens substrate.

The base material may have a visible light mean transmission factor above 95% and therefore be transparent to visible light. On the contrary, the base material can be colored i.e. having a visible light mean transmission factor below 95%, for selective or wider range wavefront.

As used herein, "a colored substrate" means that the light transmitted through the substrate is not white, but colored, that is to say, the light from a white fluorescent source is transmitted through the substrate to an observer such that the light is colored.

In a preferred embodiment, the coloring component is an absorbing dye.

As used herein, an absorbing dye may refer to both a pigment and a colorant, i.e., can be respectively insoluble or soluble in its vehicle.

Generally, the absorbing dye is incorporated directly into (a) the substrate, and/or is incorporated in one coating deposited directly or indirectly at the surface of the substrate.

Substrate

A substrate, in the sense of the present invention, should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the base constituent material of the optical lens and more particularly of the ophthalmic lens. This material acts as support for a stack of one or more coatings or layers.

The substrate may be made of mineral glass or organic glass, preferably organic glass. The organic glasses can be either thermoplastic materials such as polycarbonates and thermoplastic polyurethanes or thermosetting (cross-linked) materials such as diethylene glycol bis(allylcarbonate) polymers and copolymers (in particular CR-39® from PPG Industries), thermosetting polyurethanes, polythiourethanes, preferably polythiourethane resins having a refractive index of 1.60 or 1.67, polyepoxides, polyepisulfides, such as those having a refractive index of 1.74, poly(meth)acrylates and copolymers based substrates, such as substrates comprising (meth)acrylic polymers and copolymers derived from bisphenol-A, polythio(meth)acrylates, as well as copolymers thereof and blends thereof. Preferred materials for the lens substrate are polycarbonates (PC), diethylene glycol bis(allylcarbonate) polymers and substrates obtained from thermosetting polythiourethane resins, which are marketed by the Mitsui Toatsu Chemicals company as MR series, in particular MR6®, MR7® and MR8® resins. The latter substrates as well as the monomers used for their preparation are especially described in the patents US 4,689,387, US 4,775,733, US 5,059,673, US 5,087,758 and US 5,191,055.

Interferential coating combined to base material/substrate

The interferential coatings either asymmetric mirror or transparent or absorbing antireflective coating according to the invention can be associated either by coating or by lamination, to a clear base material/substrate, i.e., a base material/substrate having a visible light mean transmission factor Tv higher than 96%, or any other base material/substrate (including non clear ones), and define with the latter an optical article having a visible light mean transmission factor Tv preferably ranging from 96 % to 4 %, more preferably from 90% to 4%. In most cases, the resulting optical article is a colored optical article.

The Tv factor, also called relative light transmission factor in the visible spectrum, relative visible light mean transmission factor or "luminous transmission" of the system, is such as defined in the standard NF EN 1836 and relates to an average in the 380-780 nm wavelength range that is weighted according to the sensitivity of the human eye at each wavelength of the range and measured under D65 illumination conditions (daylight).

As such, the interferential coating according to the invention can be tailored so as to define, with the associated substrate, different tints of sunglasses with different visible light mean transmission factors Tv:

- above 80 %,
- from 43 to 80 % (known as sunglasses of category or class 1),
- from 18 to 43 % (known as sunglasses of class 2),
- from 8 to 18% (known as sunglasses of class 3),
- below 8 % (known as sunglasses of class 4).

Interferential coatings

The interferential coating may be virtually any interferential coating conventionally used in the field of optics, in particular ophthalmic optics. The interferential coating may be, in a non-limiting manner, an anti-reflection coating, a reflective (mirror) coating such as a mirror reflecting infrared, visible or ultraviolet light, a filter in visible spectrum such as a blue cut filter or a blue pass filter.

The multilayer interferential coating of the invention comprises a stack of at least one high refractive index layer having a refractive index higher than 1.55 and at least one low refractive index layer having a refractive index of 1.55 or less.

More preferably, the multilayer interferential coating comprises at least two layers with a low refractive index (LI) and at least two layers with a high refractive index (HI). The total number of layers in the interferential coating is preferably higher than or equal to 3, more preferably higher than or equal to 4, and preferably lower than or equal to 8 or 7, more preferably lower than or equal to 7, even more preferably lower than or equal to 5, and most preferably equal to 5 or 7 layers.

As used herein, a layer of the interferential coating is defined as having a thickness higher than or equal to 1 nm. Thus, any layer having a thickness lower than 1 nm will not be considered when counting the number of layers in the interferential coating.

HI layers and LI layers do not necessarily alternate with each other in the stack, although they also may, according to one embodiment of the invention. Two HI layers (or more) may be deposited onto each other, as well as two LI layers (or more) may be deposited onto each other.

In the present application, a layer of the interferential coating is said to be a layer with a high refractive index (HI) when its refractive index is higher than 1.55, preferably higher than or equal to 1.6, even more preferably higher than or equal to 1.8 or 1.9 and most preferably higher than or equal to 2. Said HI layers preferably have a refractive index lower than or equal to 3.3. A layer of an interferential coating is said to be a low refractive index layer (LI) when its refractive index is lower than or equal to 1.55, preferably lower than or equal to 1.52, more preferably lower than or equal to 1.48 or 1.47. Said LI layer preferably has a refractive index higher than or equal to 1.1.

Luminous reflection

The "mean light reflection factor," noted Rv, also called "luminous reflection", is such as defined in the ISO 13666:1998 standard, and measured in accordance with the ISO 8980-4 standard (for an angle of incidence lower than 17°, typically of 15°), i.e., this is the weighted spectral reflection average over the whole visible spectrum between 380 and 780 nm. It may be measured for all incidence angles $\theta$, thus defining a function Rv($\theta$).

The mean light reflection factor Rv may be defined by the following equation:

$$R_V = \frac{\int_{380}^{780} R(\lambda) \cdot V(\lambda) \cdot D_{65}(\lambda) \cdot d\lambda}{\int_{380}^{780} V(\lambda) \cdot D_{65}(\lambda) \cdot d\lambda}$$

where R($\lambda$) is the reflectance at a wavelength $\lambda$, V($\lambda$) is the eye sensitivity function in the color space defined by the CIE (Commission on Illumination, in French "Commission Internationale de l'Eclairage") in 1931 and D65($\lambda$) is the daylight illuminant defined in the CIE S005/E-1998 standard.

The mean light reflection factor Rv of a highly reflective coating or "mirror" coating is higher than 2.5%

The mean light reflection factor Rv of an anti-reflection coating according to the invention is preferably lower than or equal to 2.5%, more preferably lower than or equal to 2% or 1%, even more preferably $\leq$ 0.85 %.

Interferential coatings according to the invention

The specificity of the asymmetric mirror according to the invention deposited on a main face of base material or substrate to constitute an optical article, is that it behaves as a mirror when viewing said article from its front face, and as an anti-reflection coating when viewing said article from its rear or back face.

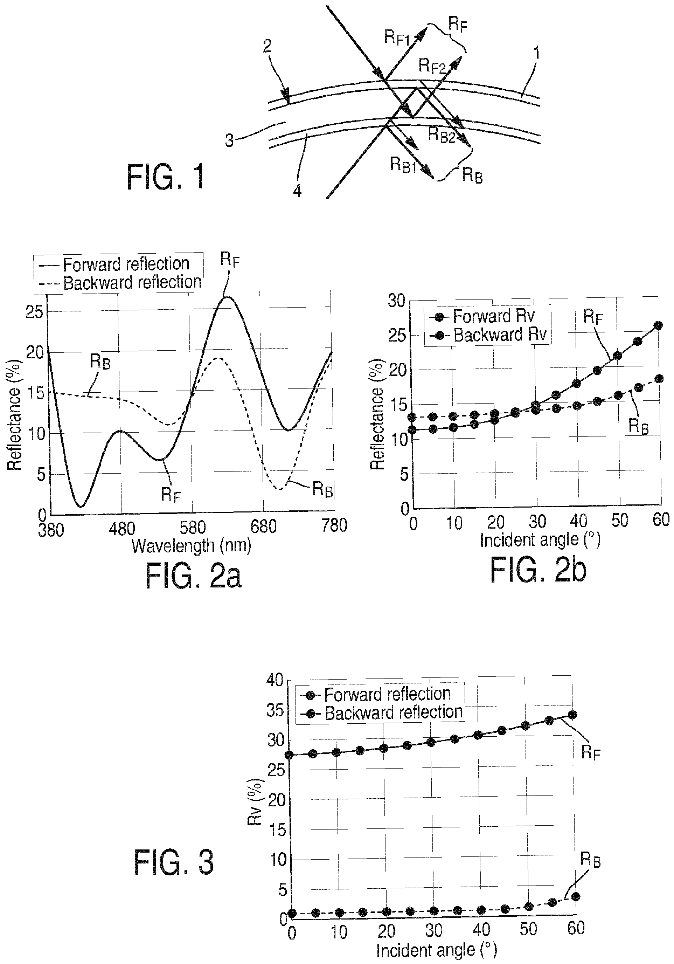

It therefore defines different reflection factors Rv depending on the direction of observation: a high (higher than 2.5%) forward reflection factor noted Rf, and a low (lower than 2.5%) backward reflection factor, noted Rb. On the figure 1, the forward reflection factor of the asymmetric mirror 1 deposited onto the front face 2 of a substrate 3 is noted Rf1, and the backward reflection factor of the asymmetric mirror 1 is noted Rb2. Due to the visible light absorbing properties of the mirror designed specifically for this purpose, the backward reflection factor Rb2 is different from the forward reflection factor Rf1, and more precisely, the backward reflection factor Rb2 is minimized (below 2.5%) and the forward reflection factor Rf1 is maximized.

To this end, the main interferential coating according to the invention, comprises a stack of at least one high refractive index HI layer having a refractive index higher than 1.55 and at least one low refractive index LI layer having a refractive index of 1.55 or less, the refractive indexes being expressed for a wavelength of 550 nm and is designed so as to define high reflective properties when viewing said article from its front face and antireflective properties when viewing said article from its rear face, and is called asymmetric mirror.

It comprises at least one layer that is a visible light absorbing sub-stoichiometric inorganic material in order to achieve with flexibility the asymmetric mirror effect with conventional manufacturing method.

The order, the combination, material, and thickness of the different HI and LI and visible light absorbing sub-stoichiometric inorganic material layers are chosen specifically for the interferential coating according to the invention to show above mentioned asymmetric mirror properties.

This asymmetric mirror according to the invention is deposited on one of the main face of the base material or substrate, preferably the front face, and can be combined to a second interferential coating deposited on the opposite face, preferably the rear face, and that is designed so as to define antireflective properties when viewing said article from its rear face.

This second interferential coating deposited on the opposite face can be constituted by an antireflective coating either transparent in transmission to visible light, or of the visible light absorbing kind.

More precisely, as illustrated on the figure 1, this second interferential coating 4 deposited on the rear face of the substrate and dedicated to face the wearer's eyes, comprises a stack of at least one high refractive index HI layer having a refractive index higher than 1.55 and at least one low refractive index LI layer having a refractive index of 1.55 or less, the refractive indexes being expressed for a wavelength of 550 nm and is designed so as to define antireflective properties when viewing said article from its rear face Rb1 (lower than 2.5%) and also antireflective properties when viewing this coating from the front face of the optical article Rf2 (lower than 2.5%).

Moreover, according to an interesting embodiment of the invention, the antireflective coating can be designed so as to define visible light absorbing properties in order to both reduce the transmission of the light coming towards the rear face to the asymmetric mirror 2 and therefore participate to the minimization of RB2, and to reduce the backward reflection at the rear face interface Rb1.

And these visible light absorbing properties of the antireflective coating are moreover obtained, according to an advantageous embodiment of the invention, thanks to at least one layer of the antireflective coating that is a visible light absorbing sub-stoichiometric inorganic material in order to achieve also with flexibility the visible light absorbing properties effect with conventional manufacturing method.

The order, the combination, material, and thickness of the different HI and LI layers and, if present, visible light absorbing sub-stoichiometric inorganic material layer(s) of the second interferential coating according to the invention, are chosen specifically for the interferential coating according to the invention to show above mentioned anti-reflective and visible light absorbing properties.

The asymmetric mirror coating 1 according to the invention and the second interferential coating 4 defining low back reflection, preferably of the antireflective kind, either transparent to or absorbing visible light, are designed such as the whole optical article comprising the asymmetric mirror coating deposited on a main face, and the second interferential coating deposited on the opposite face, defines a total forward reflection factor Rf resulting from the addition of the forward reflection factors of the asymmetric mirror Rf1 and the second interferential coating 4 Rf2, that is superior to 2.5%, and a total backward reflection factor Rb resulting from the addition of the backward reflection factors of the asymmetric mirror Rb1 and the second interferential coating 4 Rb2, that is inferior to 2.5%

The asymmetric mirror coating, the second interferential coating define their own transmission factors and can be designed so that, when taking also into account the transmission factor of the substrate or base material (colored or not colored), the whole optical article can define a predetermined transmission factor Tv.

The following examples of HI and LI layers can be used for the asymmetric mirror comprising at least one layer that is a visible light absorbing sub-stoichiometric inorganic material, and for the second interferential coating according to the invention that could also optionally comprise at least one layer of the antireflective coating that is a visible light absorbing sub-stoichiometric inorganic material. They are therefore referred to HI and LI layers of an interferential coating according to the invention.

The interferential stacks either asymmetric mirror or antireflective coating used in the present invention can be designed by a traditional modeling process of optical coatings comprising modeling the successive layers based on the well-known matrix method, with specific Tv, Rv, Rf, Rb targets to obtain the desired asymmetric mirror effect of the asymmetric mirror according to the invention with said at least, sub-stoichiometric inorganic material layer and/or the desired transmission factor for the whole optical article or an interferential coating considered alone.Thanks for the modeling process and software, a specific function for calculating backward reflection is available and it can also set a target of backward reflection Rv in addition to the forward reflection Rv, h* and C*, and other parameters.

The matrix method is well-known in the art and a description of steps thereof is provided for instance by Larouche et al. in Applied Optics, 2008, 47, 13, C219-C230.

HI layer

The HI layer generally comprises one or more metal oxides such as, without limitation, zirconia (ZrO2), titanium dioxide (TiO2), alumina ($Al_2O_3$), tantalum pentoxide ($Ta_2O_5$), neodymium oxide ($Nd_2O_5$), praseodymium oxide ($Pr_2O_3$), praseodymium titanate ($PrTiO_3$), $La_2O_3$, $Nb_2O_5$, $Y_2O_3$, SiN, $Si_3N_4$, $HfO_2$, $Ce_2O_3$, a sub-stoichiometric titanium oxide (TiOx, where x < 2, x preferably varying from 0.2 to 1.2, such as TiO, $Ti_2O_3$ or $Ti_3O_5$), a sub-stoichiometric zirconium oxide (ZrOx, where x < 2, x preferably varying from 0.2 to 1.2), a sub-stoichiometric silicon oxide (SiOx, where x < 2, x preferably varying from 0.2 to 1.2, more preferably from 0.9 to 1.1, such as SiO), a sub-stoichiometric silicon nitride (SiNy, where y < 1, y preferably varying from 0.1 to 0.6), or a sub-stoichiometric silicon nitride oxide SiNxOy, where x and y are predetermined numbers such as x<1-y/2, and y<2(1-x) and mixtures thereof.

The sub-stoichiometric materials listed above can show absorbing properties in the visible range, depending on the layer thickness, on the layers number and/or conditions used during their deposition.

In the present invention, a visible light-absorbing layer is defined as a layer which, when directly deposited as a monolayer onto the surface of a clear substrate (such as a polycarbonate substrate), reduces the luminous transmittance Tv of said clear substrate by at least 5 %, preferably at least 10 %, more preferably at least 20 %, by absorption, as compared to the same clear substrate without the layer in question. Absorption does not include reflection.

At least one of the layers of the multilayer interferential coating according to the invention is a layer comprising a visible light absorbing material, referred to as a "visible light-absorbing layer", "light-absorbing layer" or "absorbent layer", comprising a visible light absorbing material, i.e., one or more visible light absorbing compounds. Its function is to reduce transmission of visible light by absorption.

The absorbent layer may be any layer known to one skilled in the art and suitable for absorbing at least part of the visible light (380-780 nm).

Extinction coefficient k

Said layer of light absorbing material preferably has an extinction coefficient k at 550 nm higher than or equal to 0.1, 0.3 or 0.5. In one embodiment, the layer of light absorbing material has an extinction coefficient k higher than or equal to 0.1, 0.3 or 0.5 for any wavelength ranging from 400 to 800 nm. The extinction coefficient (also known as attenuation coefficient) of a particular substance, denoted k, measures the loss in energy of electromagnetic radiation traversing this medium. This is the imaginary part of the complex refractive index.

The interferential stack may comprise at least one, or at least two, or at least three absorbent layers. It preferably comprises 1 to 3 visible-light-absorbing layers.

The visible-light-absorbing layers are generally layers having a high refractive index, with a refractive index of at least 1.55, preferably at least 1.80, in particular at least 2.0.

According to the present disclosure, the composition and/or thickness and/or number of the light-absorbing layers can be adjusted so that the visible light mean transmission factor Tv of the optical lens preferably ranges from 96 % to 4 % and/or so as to impart asymmetric mirror effect to the interferential stack. For example, the values of x or y in $SiO_x$ or $SiN_y$ layers can be varied by changing the deposition conditions (e.g., precursor gas amounts), since stoichiometric materials such as SiN and $SiO_2$ are non-light-absorbing materials in the visible range. The refractive index of sub-stoichiometric $SiN_y$ and $SiO_x$ layers is higher than that of the corresponding stoichiometric SiN and $SiO_2$ coatings. Lower values of x and/or y provide lenses with a lower transmittance Tv (the refractive index increases gradually when the layer becomes more and more deficient in nitrogen or oxygen), so do thicker light-absorbing layers.

The number and/or the thickness of light-absorbing layers of the interferential coatings according to the invention, can also be controlled to adjust the value of the visible light mean transmission factor Tv and/or the asymmetric mirror effect within the above range. As a result, class 1 to 4 transmissions can be achieved and different asymmetric mirror effects be defined for the resulting coated lens.

The material of the absorbent layer can be any material known in the art and affording the desired light absorption properties. For instance, the light absorbing material can be a sub-stoichiometric inorganic material having generally a refractive index higher than 1.55.

The sub-stoichiometric inorganic material can result from the reaction of oxygen and/or nitrogen with at least one metal element or metalloid element. Suitable metal and metalloid elements include Mg, Y, Ti, Zr, Hf, V, Cr, Nb, Ta, W, Zn, Al, In, Sn, Sb, Si Ge and Bi.

Non-limiting examples of sub-stoichiometric inorganic materials are a sub-stoichiometric oxide, oxynitride or nitride of a metal or metalloid such as a sub-stoichiometric titanium oxide, a sub-stoichiometric silicon oxide, a sub-stoichiometric zirconium oxide, a sub-stoichiometric silicon nitride, all of which have been defined above, NiO, TiN, a sub-stoichiometric tungsten oxide such as WO, a sub-stoichiometric titanium oxynitride, a sub-stoichiometric silicon oxynitride and any mixture thereof.

The sub-stoichiometric inorganic material can also be doped with oxides, nitrides and oxynitrides of elements such as Ti, Fe and Cu that raise the refractive index and extinction coefficient k of the material.

In a preferred embodiment, the sub-stoichiometric inorganic material is selected from $SiN_y$, $SiO_x$, $TiO_x$ and $ZrO_x$, where y < 1 and x < 2. Preferred ranges for x and y have been defined above, or $SiN_xO_y$, where x and y are predetermined numbers such as x<1-y/2, and y<2(1-x).

In one embodiment, the multilayer interferential coating comprises at least one $SiO_x$ layer such as defined above. In another embodiment, the multilayer interferential coating comprises at least one $SiN_y$ layer such as defined above.

In one embodiment, all the high refractive index layers of the interferential coating having a thickness higher than or equal to 6 nm are visible light-absorbing layers.

In one embodiment, the material of an additional absorbent layer can be a metal layer being at least one of Al, Cr, Ta, Nb, Ti and Zr, participating to the asymmetric mirror's behavior.

In one embodiment, all the high refractive index layers of the interferential coating which are not electrically conductive (such as $SnO_2$ or ITO layers) are visible light-absorbing layers.

Optionally, the HI layers may further contain silica or other materials with a low refractive index, provided they have a refractive index higher than 1.55 as indicated hereabove. The preferred materials include $ZrO_2$, $PrTiO_3$, $Nb_2O_5$, $Ta_2O_5$, $TiO_2$, $Y_2O_3$, SiOx as defined above, SiNy as defined above, and mixtures thereof.

In one embodiment, the interferential coating comprises at least one $Ta_2O_5$-based layer.

LI layer

The LI layer is also well known and may comprise, without limitation, $SiO_2$, $MgF_2$, $ZrF_4$, $AlF_3$, $Na_5Al_3F_{14}$, $Na_3[AlF_6]$, or a mixture of silica and alumina, especially silica doped with alumina, the latter contributing to increase the interferential coating thermal resistance. The LI layer is preferably a layer comprising at least 80% by weight of silica, more preferably at least 90 % by weight of silica, relative to the layer total weight, and even more preferably consists in a silica layer.

Optionally, the LI layers may further contain materials with a high refractive index, provided the refractive index of the resulting layer is lower than or equal to 1.55.

The interferential coating external layer, i.e., its layer that is the furthest from the substrate is generally a silica-based layer, comprising at least 80 % by weight of silica, more preferably at least 90 % by weight of silica (for example a silica layer doped with alumina), relative to the layer total weight, and even more preferably consists of a silica layer.

The interferential coating innermost layer, i.e., its layer that is in direct contact with the hard coating, is preferably a high refractive index layer.

Generally, the HI and/or LI layers have a physical thickness ranging from 5 to 250 nm, preferably from 6 to 120 nm. Their thickness may vary to a large extent, depending for instance on the desired properties for the layer, on the layer material, on the deposition technique and/or on the layer position in the stack.

Generally, the total thickness of the interferential coating is lower than 1 $\mu$m, preferably lower than or equal to 800 nm, more preferably lower than or equal to 500 nm and even more preferably lower than or equal to 450 nm. The interferential coating total thickness is generally higher than 100 nm, preferably higher than 200 nm, and preferably lower than 1 $\mu$m, 500 nm or 400 nm.

Moreover, the optical article has a good resistance to heat and temperature variations, i.e., a high critical temperature. In the present patent application, the critical temperature of an article is defined as being the temperature starting from which cracks appear in a coating present at the surface of the substrate (on either main face), which results in degradation of the coating, generally the interferential coating. The critical temperature of an article coated according to the invention is preferably $\geq 70°C$, more preferably $\geq 75°C$, $80°C$, $90°C$, $100°C$ or $110°C$.

Antistatic layer

The optical article of the invention may be made antistatic, that is to say not to retain and/or develop a substantial static charge, by incorporating at least one electrically conductive layer into the stack present on the surface of the article, preferably in the interferential coating.

The ability for a lens to evacuate a static charge obtained after rubbing with a piece of cloth or using any other procedure to generate a static charge (charge applied by corona...) may be quantified by measuring the time it takes for said charge to dissipate. Thus, antistatic lenses have a discharge time of about a few hundred milliseconds, preferably 500 ms or less, whereas it is of about several tens of seconds for a static lens. In the present application, discharge times are measured according to the method exposed in the French application FR 2943798.

As used herein, an "electrically conductive layer" or an "antistatic layer" is intended to mean a layer which, due to its presence on the surface of a substrate, decreases the ability of the optical article to attract dust/particles due to charge accumulation. Preferably, when applied onto a non-antistatic substrate (i.e., having a discharge time higher than 500 ms), the antistatic layer enables the optical article not to retain and/or develop a substantial static charge, for example to have a discharge time of 500 ms or less after a static charge has been applied onto the surface thereof, so that small dust is prevented from adhering to the optical article due to prevention of static effects.

The electrically conductive layer may be located at various places in the stack, generally in or in contact with the interferential coating, provided that the reflective or anti-reflective properties thereof are not affected. It is preferably located between two layers of the interferential coating, and/or is preferably adjacent to a layer with a high refractive index of such interferential coating. In an embodiment, the electrically conductive layer is located immediately under a layer with a low refractive index of the interferential coating, most preferably is the penultimate layer of the interferential coating by being located immediately under the LI external layer of the interferential coating.

In one embodiment, the electrically conductive layer is in direct contact with two layers having a refractive index of 1.55 or less, and said electrically conductive layer is preferably located in penultimate position of the interferential coating in the direction moving away from the substrate.

The electrically conductive layer should be thin enough not to alter the transparency of the interferential coating. The electrically conductive layer is preferably made from an electrically conductive and highly transparent material, generally an optionally doped metal oxide. In this case, the thickness thereof preferably ranges from 1 to 15 nm, more preferably from 1 to 10 nm, ideally from 2 to 8 nm. Preferably, the electrically conductive layer comprises an optionally doped metal oxide, selected from indium, tin, zinc oxides and mixtures thereof. Indium-tin oxide ($In_2O_3$:Sn, tin-doped indium oxide, noted ITO), aluminum-doped zinc oxide (ZnO:Al), indium oxide ($In_2O_3$) and tin oxide ($SnO_2$) are preferred. In a most preferred embodiment, the electrically conductive and optically transparent layer is an $SnO_2$ layer.

Generally, the electrically conductive layer contributes, within the stack, but in a limited manner because of its low thickness, to obtaining interferential properties and typically represents a layer with a high refractive index in said coating. This is the case for those layers made from an electrically conductive and highly transparent material such as ITO or $SnO_2$ layers. Accordingly, when it is present, the electrically conductive layer is preferably the outermost high refractive index layer of the interferential coating, or one of the outermost high refractive index layers of the interferential coating when it is adjacent to one or more high refractive index layers.

The electrically conductive layer may be deposited according to any suitable method, for example by vacuum evaporation deposition, preferably ion-beam-assisted (IAD, described notably in US patent application 2006/017011 and in US patent 5268781.) to increase its transparence, or by means of cathode sputtering.

The electrically conductive layer may also be a very thin layer of a noble metal (Ag, Au, Pt, etc.) typically smaller than 1 nm in thickness and preferably less than 0.5 nm in thickness.

Method of deposition

The various layers of the interferential coating, are preferably deposited by vapor phase deposition, under vacuum, according to any of the following methods: i) by evaporation, optionally under ion beam assistance; ii) by ion-beam spraying; iii) by cathode sputtering; iv) by plasma-assisted chemical vapor deposition. These various methods are described in the following references "Thin Film Processes" and "Thin Film Processes II," Vossen & Kern, Ed., Academic Press, 1978 and 1991, respectively. A particularly recommended method is evaporation under vacuum. Preferably, the deposition of each of the above-mentioned layers is conducted by evaporation under vacuum. Such a process does advantageously avoid heating the substrate, which is particularly interesting for coating heat-sensitive substrates such as organic glasses.

The light absorbing layers, when comprising a sub-stoichiometric inorganic material, can be formed according to known methods. The sub-stoichiometry of the material can be obtained thanks to physical vapor deposition or chemical vapor deposition of a precursor material, typically by magnetron sputtering.

For example, a SiNy layer may be deposited by magnetron sputtering of a silicon target in an atmosphere comprising a mixture of $N_2$ and argon with a predetermined $N_2$/Ar flow rate ratio. In another embodiment, a $SiO_x$ layer may be deposited by magnetron sputtering of a silicon target in an atmosphere comprising a mixture of $O_2$ and argon with a predetermined $O_2$/Ar flow rate ratio. The value of Tv and/or the asymmetric mirror effect of the final article depends on the value of such ratios and/or on the value of the thickness and/or the number of the layers.

The above-mentioned silicon target is a non-limiting example of a source material for depositing the $SiN_x$ and/or $SiO_x$ visible-light absorbing materials.

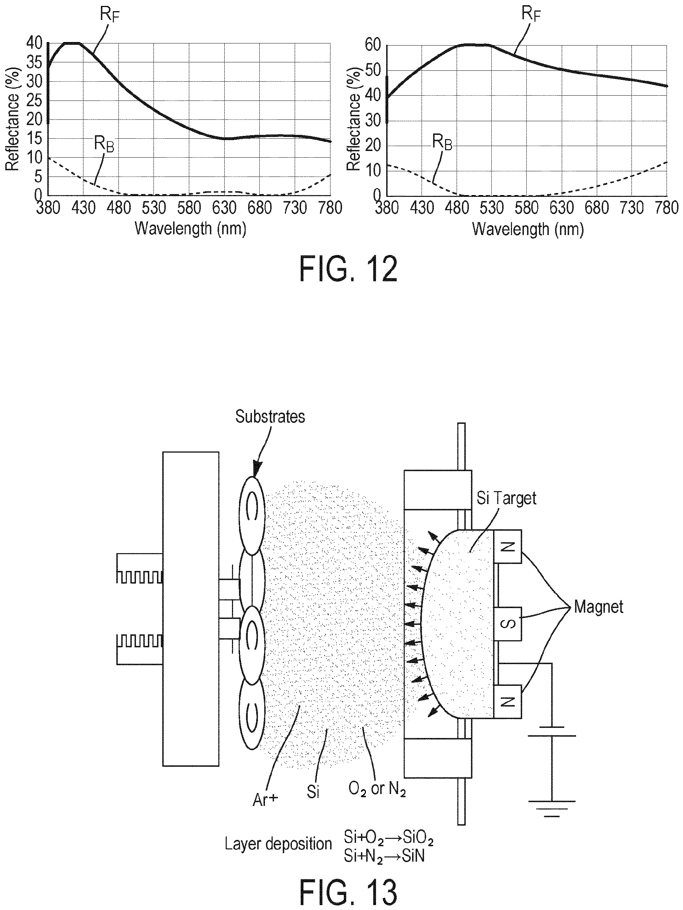

In a thin film deposition process by magnetron sputtering, the source material may be a solid block and is referred to as a sputtering target. By way of non-limiting example, the sputtering target may be a pure silicon disk, as shown in Figure 13.

In one embodiment, during the deposition process, high energy argon plasma is generated and bombards the Si target surface. As a result, Si atoms or clusters are kicked out by the high energy $Ar^+$ ions from the Si target and are then deposited onto the substrate surface to form a layer or thin film.

During the sputtering process, if nitrogen or oxygen gas is introduced into the deposition chamber, silicon nitride or silicon oxide material will be deposited.

If a sufficient amount of nitrogen or oxygen is introduced, optically transparent SiN or $SiO_2$ materials with a stoichiometric composition can be deposited.

According to the present disclosure, on the other hand, as long as an insufficient amount of nitrogen or oxygen is introduced, optically absorptive $SiN_y$ (with y<1) or $SiO_x$ (with x<2) materials with a sub-stoichiometric composition can be deposited.

Flexibility and control of the asymmetric mirror effect or transmission factor of the asymmetric mirror or absorbing antireflective coating according to the invention

More details concerning the deposition of light-absorbing layers and the influence of the different deposition parameters on the properties of said layers will be detailed below.

In an embodiment where the coating comprises, as a HI absorbing layer, a sub-stoichiometric HI layer, the sub-stoichiometry of the material is obtained thanks to physical vapor deposition or chemical vapor deposition of the material, and more preferably by magnetron sputtering.

For example, in an embodiment where the coating is made of SiNx, a predetermined thickness of the SiNx layer may be deposited by magnetron sputtering of a silicon target in an atmosphere comprising a mixture of N2 and Ar with a predetermined N2/Ar ratio.

In such an embodiment, the value of the visible light mean transmission factor of the coating depends on the value of the thickness of the SiNx layer and on the value of the N2/Ar ratio.

In an embodiment where the coating comprises, as a HI absorbing layer, a layer made of SiOx, a predetermined thickness of the SiOx layer may be deposited by magnetron sputtering of a silicon target in an atmosphere comprising a mixture of O2 and Ar with a predetermined O2/Ar ratio.

In such an embodiment, the value of the visible light mean transmission factor of the coating depends on the value of the thickness of the SiOx layer and on the value of the O2/Ar ratio.

The above-mentioned silicon target is a non-limiting example of a source material for depositing the SiNx and/or SiOx light absorbing materials.

In a thin film deposition process by magnetron sputtering, the source material may be a solid block and is referred to as a sputtering target. By way of non-limiting example, the sputtering target may be a pure silicon disk.

In an embodiment, during the deposition process, high energy argon plasma is generated and bombards the Si target surface. As a result, Si atoms or clusters are kicked out by the high energy Ar+ ions from the Si target and are then deposited onto the substrate surface to form a layer or thin film.

During the sputtering process, if nitrogen or oxygen gas is introduced into the deposition chamber, silicon nitride or silicon oxide material will be deposited.

If a sufficient amount of nitrogen or oxygen is introduced, optically transparent SiN or SiO2 materials with a stoichiometric composition can be deposited.

According to the present disclosure, on the other hand, as long as an insufficient amount of nitrogen or oxygen is introduced, optically absorptive SiNx (with x<1) or SiOx (with x<2) materials with a sub-stoichiometric composition can be deposited.

According to the disclosure, the coating comprises more than one layer i.e. it is a multilayer coating.

In some embodiments, the coating may comprise at least one sub-stoichiometric SiNx and/or SiOx layer, where x is a predetermined number.

In such a case, predetermined thicknesses of the SiNx and SiN layers may be deposited by magnetron sputtering of a silicon target in an atmosphere comprising a mixture of N2 and Ar with a predetermined N2/Ar ratio. Similarly, predetermined thicknesses of the SiOx and SiO2 layers may be deposited by magnetron sputtering of a silicon target in an atmosphere comprising a mixture of O2 and Ar with a predetermined O2/Ar ratio.

The asymmetric mirror effect and/or the transmittance of a base material coated with an interferential coating according to the invention having one or more such absorptive layers can be controlled by selecting its/their composition and/or its/their thickness. As a result, class 1 to 4 transmission can be achieved for the resulting coated lens.

Namely, the asymmetric mirror effect and/or the value of the visible light mean transmission factor of the interferential coating depends on:

- the thicknesses of the SiNx and SiN layers; and/or their number; and/or
- the thicknesses of the SiOx and SiO2 layers; and/or their number; and/or
- the values of the N2/Ar and O2/Ar ratios.

In an embodiment, the coating according to the disclosure may be a colored mirror coating, i.e. the mirror coating has a predetermined color.

The color of the mirror can be designed in a very flexible manner, so that it may show at least one predetermined color, said color having wavelengths in the visible wavelength range, including blue and/or green and/or gold and/or purple and/or pink and/or red and/or any other desired color or mixture of colors.

Sunglasses according to the disclosure may be provided with one more (generally two) lenses having features of the optical articles as described above.

The present disclosure also provides a method for manufacturing an optical article as described above.

In some embodiments where the optical article comprises a base material having at least one face coated with an interferential multilayer coating providing either high reflective or antireflective properties, wherein the coating comprises at least one layer of light absorbing material which has an adjustable composition and thickness, such that respectively the asymmetric mirror effect is created and the visible light mean transmission factor of said coating is controllable to have a value between 95% and 5%, the method for manufacturing the optical article comprises depositing on the base material a predetermined thickness of the at least one layer of light absorbing material.

In some embodiments, the depositing step may comprise depositing a predetermined thickness of SiNx in an atmosphere comprising a mixture of N2 and Ar with a predetermined N2/Ar ratio.

In such embodiments, the value of the visible light mean transmission factor of the coating depends on:

- the value of the thickness of the deposited SiNx; and
- the value of the N2/Ar ratio.

In alternative embodiments, the depositing step may comprise depositing a predetermined thickness of SiOx in an atmosphere comprising a mixture of O2 and Ar with a predetermined O2/Ar ratio.

In such alternative embodiments, the value of the visible light mean transmission factor of the coating depends on:

- the value of the thickness of the deposited SiOx; and
- the value of the O2/Ar ratio.

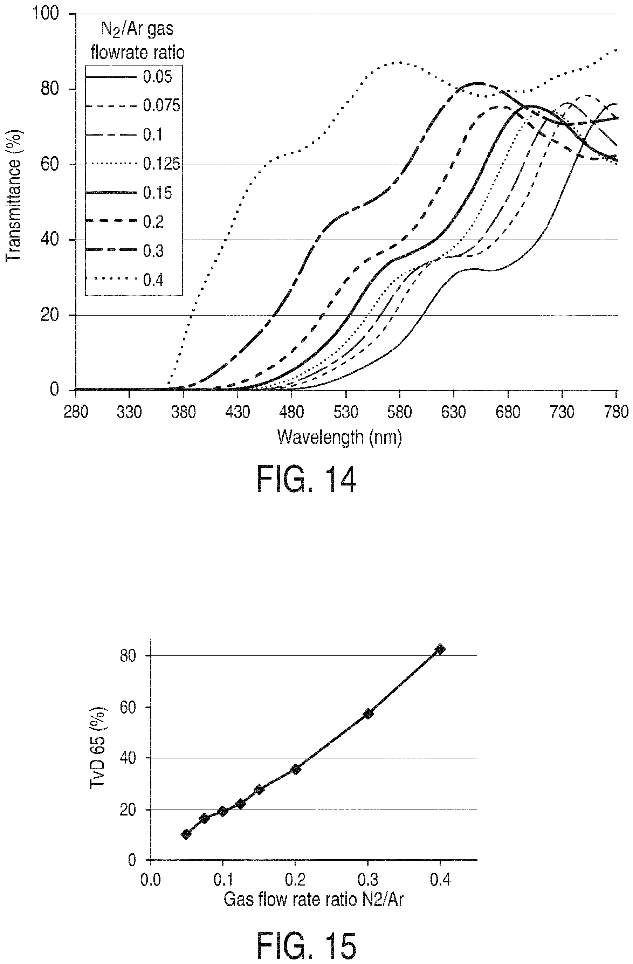

Figure 14 shows typical transmittance spectra of eight lens Orma/Titus -2.00 substrates with 260 nm SiNx monolayer coatings deposited in a mixture $N_2$/Ar atmosphere with diffferent ratio of $N_2$/Ar gas flow rate.

One surface, e.g. the convex surface, denoted Cx, of the lenses was coated with monolayer SiNx coatings having a thickness of approximately 260 nm, which were deposited by magnetron sputtering in a N2+Ar mixture atmosphere, with different ratios of N2/Ar gas flow rate.

It can be seen that, as the N2/Ar ratio decreases, the transmittance of the coated lenses decreases significantly. The mean luminous transmission factor Tv (%) can be calculated according to the following formula:

$$Tv = \frac{\int_{380}^{780} T(\lambda) \cdot V(\lambda) \cdot D_{65}(\lambda) d\lambda}{\int_{380}^{780} V(\lambda) \cdot D_{65}(\lambda) d\lambda}$$

where $T(\lambda)$ is the spectral transmittance of the lenses as shown in Figure 14, $V(\lambda)$ is the human eye sensitivity function, and $D65(\lambda)$ is the solar spectrum.

The Tv values for the above-mentioned absorptive SiNx monolayer is shown in Figure 15. It can be seen that Tv is approximately proportional to the ratio of N2/Ar gas flow rate during coating deposition.

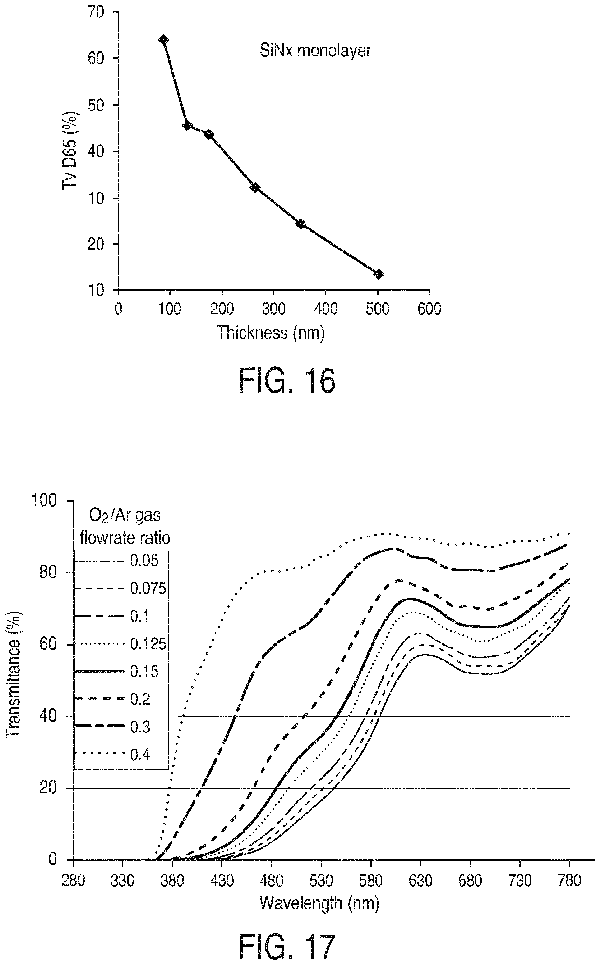

In addition to their dependence on coating composition, the transmittance of the SiNx coatings also depends on coating thickness such that Tv decreases as the coating thickness increases. In this respect, Figure 16 shows the variation of mean visible transmission factor Tv as a function of the thickness of the SiNx coatings deposited by magnetron sputtering, with a ratio of N2/Ar gas flow rate fixed at 0.2.

Similarly, sub-stoichiometric SiOx (x<2) coatings deposited by reactive magnetron sputtering show optical absorption.

In this respect, Figure 17 shows typical transmittance spectra of eight Orma/Titus substrate, of which the front surface was coated with monolayer SiOx coatings having an approximate thickness of 370 nm, which were deposited in an $O_2$/Ar mixture atmosphere with different ratios of $O_2$/Ar gas flow rate.

It can be seen that, as the $O_2$/Ar ratio decreases, the transmittance of the lenses decreases significantly, particularly in the short wavelength range.

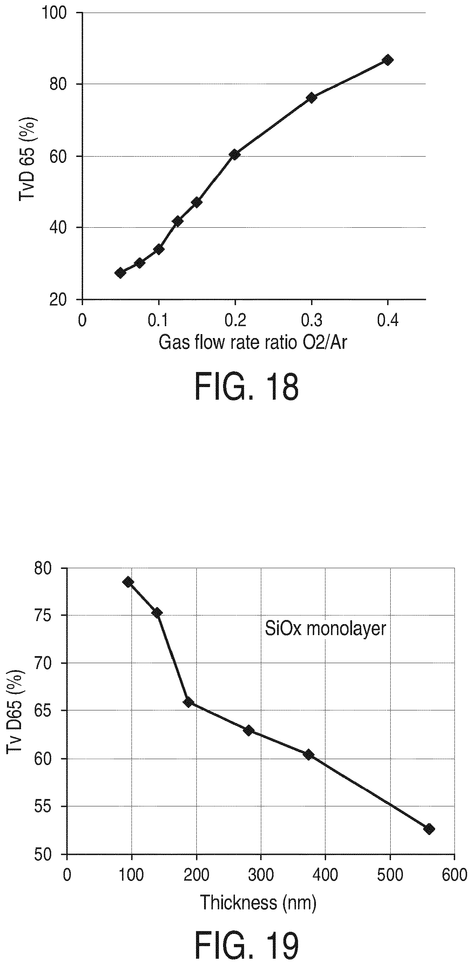

Figure 18 shows that Tv for the SiOx monolayer coatings decreases as the ratio of O2/Ar gas flow rate decreases, thus showing the dependence of Tv of SiOx monolayer coatings on the ratio of O2/Ar gas flow rate during deposition.

Figure 19 shows the variation of Tv as a function of the thickness of the SiOx coatings deposited by magnetron sputtering, with a ratio of O2/Ar gas flow rate fixed at 0.2.

It can be seen that, Tv decreases as the $SiO_x$ coating thickness increases.

The depositing step in all the above methods may comprise magnetron sputtering using a silicon target.

Nevertheless, magnetron sputtering is mentioned by way of non-limiting example only of conventional method of deposition of material layer. As a variant, an e-beam evaporation technique may be used for generating an interferential coating according to the disclosure.

In such a variant, an additional gas line for supplying N2 and/or O2 may be provided in the e-beam evaporation antireflective coating machine.

More generally, the depositing step may comprise using a chemical or physical vapor deposition technique.

Absorptive materials can be incorporated in multilayer interferential AR or mirror coatings as detailed above. Such absorptive interferential coatings are applicable to sunglasses, with a simpler production flow as in the prior art since no tinting step is needed.

In order to design AR or mirror stacks involving absorptive SiOx and/or SiNx materials, optical properties of different monolayer coatings deposited by magnetron sputtering can be determined by spectroscopy ellipsometry.

Stoichiometric SiN (deposited in a N2+Ar mixture atmosphere, with a ratio of N2/Ar gas flow rate higher than 1.0) and SiO2 (deposited in an O2+Ar mixture atmosphere, with a ratio of O2/Ar gas flow rate higher than 1.25) coatings showed no obvious absorption in the visible light region (380-780 nm). Their refractive index at 550 nm is 1.968 and 1.462, respectively.

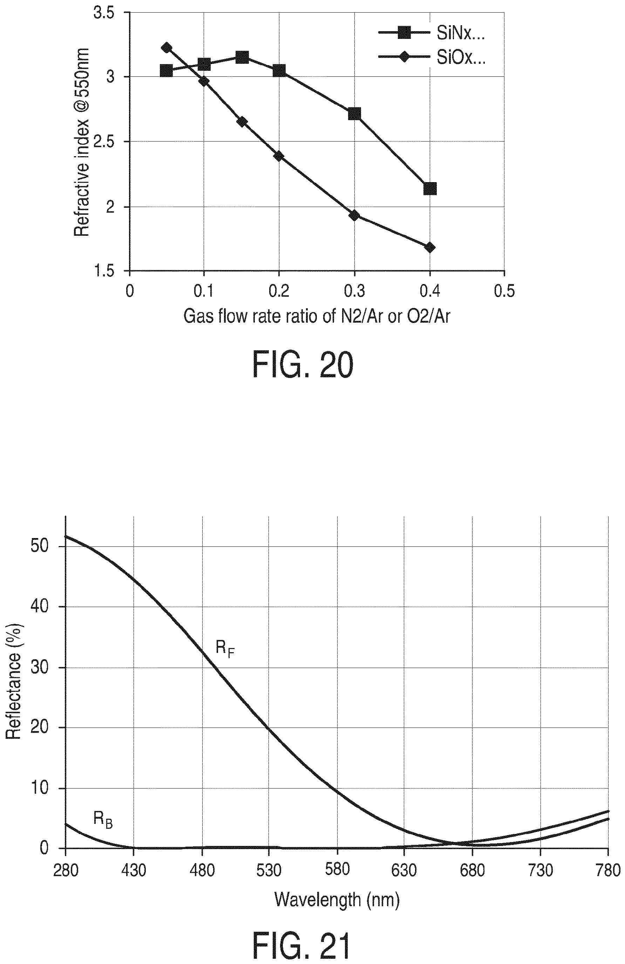

Figure 20 shows the refractive index at 550 nm of the absorptive SiNx and SiOx coatings deposited by magnetron sputtering.

It is noted that the refractive index of sub-stoichiometric SiNx and SiOx coatings is higher than that of corresponding stoichiometric SiN and SiO2 coatings. Generally, the refractive index increases when decreasing the ratio of N2/Ar or O2/Ar gas flow rate. In other words, the refractive index increases gradually when the coating becomes more and more deficient in nitrogen or in oxygen.

Such absorptive materials can be incorporated in multilayer interferential AR or mirror coatings in combination with stoichiometric SiO2 and/or SiN materials.

In another embodiment, a low-temperature plasma CVD method is used to deposit the visible-light absorbing layers. As the raw material gas, silane gas (monosilane, dichlorosilane or the like) and hydrogen gas, nitrogen gas, oxygen gas or ammonium gas are mixed in a sample chamber at a predetermined flow rate ratio so that, for example, SiOx and/or SiNy layers are formed.

The outermost low refractive index layer(s) of the interferential coating is (are) preferably deposited without ionic assistance, preferably without concomitant treatment with energetic species. In another embodiment, the low refractive index layers of the interferential coating is deposited without ionic assistance, preferably without concomitant treatment with energetic species.

In one embodiment, no layer of the interferential coating is deposited under ion assistance (preferably no layer of the interferential coating is deposited under concomitant treatment with energetic species), except the electrically conductive layer(s), if present in the interferential coating.

In another embodiment, at least one HI layer of the interferential coating is deposited under ion assistance, such as an electrically conductive layer or a $Ta_2O_5$ layer, if present in the interferential coating.

Optionally, the deposition of one or more of the layers is performed by supplying (a supplementary) gas during the deposition step of the layer in a vacuum chamber, such as disclosed in US 2008/206470. Concretely, an additional gas such as a rare gas, for example argon, krypton, xenon, neon; a gas such as oxygen, nitrogen, or mixtures of two gases or more amongst these, is or are introduced into the vacuum deposition chamber while the layer is being deposited. The gas employed during this deposition step is not an ionized gas, more preferably not an activated gas.

This gas supply makes it possible to regulate the pressure and differs from an ionic bombardment treatment, such as ion assistance. It generally enables the limitation of stress in the interferential coating and to reinforce the adhesion of the layers. When such deposition method is used, which is called deposition under gas pressure regulation, it is preferred to work under an oxygen atmosphere (so called "passive oxygen"). The use of an additional gas supply during the deposition of a layer produces a layer that is structurally different from a layer deposited without additional gas supply.

In one embodiment, the outermost high refractive index layer(s) of the interferential coating, except the electrically conductive layers, if present in outermost position, is (are) deposited in a vacuum chamber in which at least one supplementary gas is supplied during said deposition. In another embodiment, the high refractive index layer(s) of the interferential coating, except the electrically conductive layer(s), if present in outermost position, is (are) deposited in a vacuum chamber in which at least one supplementary gas is supplied during said deposition.

Primer coating

The impact-resistant primer coating which may be used in the present invention can be any coating typically used for improving impact resistance of a finished optical article. By definition, an impact-resistant primer coating is a coating which improves the impact resistance of the finished optical article as compared with the same optical article but without the impact-resistant primer coating.

Typical impact-resistant primer coatings are (meth)acrylic based coatings and polyurethane based coatings. In particular, the impact-resistant primer coating according to the invention can be made from a latex composition such as a poly(meth)acrylic latex, a polyurethane latex or a polyester latex.

Preferred primer compositions include compositions based on thermoplastic polyurethanes, such as those described in the patents JP 63-141001 and JP 63-87223, poly(meth)acrylic primer compositions, such as those described in the patents US 5,015,523 and US 6,503,631, compositions based on thermosetting polyurethanes, such as those described in the patent EP 0404111 and compositions based on poly(meth)acrylic latexes or polyurethane latexes, such as those described in the patents US 5,316,791 and EP 0680492. Preferred primer compositions are compositions based on polyurethanes and compositions based on latexes, in particular polyurethane latexes, poly(meth)acrylic latexes and polyester latexes, as well as their combinations. In one embodiment, the impact-resistant primer comprises colloidal fillers.

Poly(meth)acrylic latexes are latexes based on copolymers essentially made of a (meth)acrylate, such as for example ethyl (meth)acrylate, butyl (meth)acrylate, methoxyethyl (meth)acrylate or ethoxyethyl (meth)acrylate, with at least one other co-monomer in a typically lower amount, such as for example styrene.

Commercially available primer compositions suitable for use in the invention include the Witcobond® 232, Witcobond® 234, Witcobond® 240, Witcobond® 242 compositions (marketed by BAXENDEN CHEMICALS), Neorez® R-962, Neorez® R-972, Neorez® R-986 and Neorez® R-9603 (marketed by ZENECA RESINS), and Neocryl® A-639 (marketed by DSM coating resins).

The thickness of the impact-resistant primer coating, after curing, typically ranges from 0.05 to 30 µm, preferably 0.2 to 20 µm and more particularly from 0.5 to 10 µm, and even better 0.6 to 5 µm or 0.6 to 3 µm, and most preferably 0.8 to 1.5 µm.

The impact-resistant primer coating is preferably in direct contact with an abrasion- and/or scratch-resistant coating. In one embodiment, its refractive index ranges from 1.45 to 1.55. In another embodiment, its refractive index is higher than or equal to 1.55.

Abrasion and/or scratch-resistant coating

The abrasion- and/or scratch-resistant coating may be any layer traditionally used as an anti-abrasion and/or anti-scratch coating in the field of optical lenses. When present, it is generally located under the first high refractive index sheet (A) and in direct contact with it.

The abrasion- and/or scratch-resistant coatings are preferably hard coatings based on poly(meth)acrylates or silanes, generally comprising one or more mineral fillers intended to increase the hardness and/or the refractive index of the coating once cured.

Abrasion- and/or scratch-resistant coatings are preferably prepared from compositions comprising at least one alkoxysilane and/or a hydrolyzate thereof, obtained for example through hydrolysis with a hydrochloric acid solution and optionally condensation and/or curing catalysts.

Suitable coatings that are recommended for the present invention include coatings based on epoxysilane hydrolyzates such as those described in the patents EP 0614957, US 4211823 and US 5015523.

A preferred abrasion- and/or scratch-resistant coating composition is the one disclosed in the patent EP 0614957, in the name of the applicant. It comprises a hydrolyzate of epoxy trialkoxysilane and dialkyl dialkoxysilane, colloidal silica and a catalytic amount of an aluminum-based curing catalyst such as aluminum acetylacetonate, the rest being essentially composed of solvents traditionally used for formulating such compositions. Preferably, the hydrolyzate used is a hydrolyzate of γ-glycidoxypropyltrimethoxysilane (GLYMO) and dimethyldiethoxysilane (DMDES).

The abrasion- and/or scratch-resistant coating composition may be deposited by known methods and is then cured, preferably using heat or ultraviolet radiation. The thickness of the (cured) abrasion- and/or scratch-resistant coating does generally vary from 2 to 10 µm, preferably from 3 to 5 µm.

Hydrophobic and/or oleophobic coating (antifouling top coat)

The optical article according to the invention may also comprise coatings formed on the interferential coating and capable of modifying the surface properties thereof, such as a hydrophobic and/or oleophobic coating (antifouling top coat). These coatings are preferably deposited onto the outer layer of the interferential coating. Generally, their thickness is lower than or equal to 10 nm, does preferably range from 1 to 10 nm, more preferably from 1 to 5 nm. Antifouling top coats are generally coatings of the fluorosilane or fluorosilazane type, preferably comprising fluoropolyether moieties and more preferably perfluoropolyether moieties. More detailed information on these coatings is disclosed in WO 2012076714.

Instead of a hydrophobic coating, a hydrophilic coating may be used which provides anti-fog properties (anti-fog coating), or a precursor of an anti-fog coating which provides anti-fog properties when associated with a surfactant. Examples of such anti-fog precursor coatings are described in the patent application WO 2011/080472.

The additional coatings such as primers, hard coats and antifouling top coats may be deposited onto a main face of the substrate using methods known in the art, including spin-coating, dip-coating, spray-coating, evaporation, sputtering, chemical vapor deposition and lamination.

Typically, an optical article according to the invention comprises a base material or substrate, a main surface of which is successively coated with an impact-resistant primer layer, an anti-abrasion and/or scratch-resistant layer, a light-absorbing interferential coating of the asymmetric mirror kind according to the invention, and a hydrophobic and/or oleophobic coating, or a hydrophilic coating which provides anti-fog properties, or an anti-fog precursor coating.

Due to the presence the asymmetric mirror according to the invention, there is obtained an optical article defining high reflective properties when viewing said article from its front face and with antireflective properties when viewing said article from its rear face while being obtained with conventional method of manufacture and while having a visible light transmission that can be flexibly controlled..

According to the present invention, the optical article, the main face of which, preferably the front face, is covered by the asymmetric mirror according to the invention - a weighted spectral reflection average over the whole visible spectrum between 380-780 nm for light arriving on the front main face, called forward reflectance Rf, at incident angles lower than 15° that is above 2.5%,

- and a weighted spectral reflection average over the whole visible spectrum between 380-780 nm for light arriving on the rear main face, called backward reflectance Rb, at incident angles lower than 15°, below 2.5%, preferably below 2%, preferably below 1.5%, preferably below 1%, preferably below 0.7%, preferably below 0.6%, preferably below 0.5%, preferably below 0.4%, preferably below 0.3%, preferably below 0.2%,

- and wherein the ratio between the forward reflectance and the backward reflectance at an incident angle of 15° noted Rf/Rb is equal or above 10, preferably above 20, preferably above 30.

From the wearer's point of view, decreasing reflection of light rays comprised in an incident angle range of [30°-45°] is crucial, as light having such angles of incidence generates reflection from the back side of the lens and discomfort.

The present absorptive interferential coatings can be directly used for sunglass production on any kind of substrates, without the need of substrate or coating tinting, thus simplifying the production process. Additionally, the transmittance of the coated optical article can be flexibly controlled from class 1 to class 4.

The visible light-absorbing performances can be combined with other optical performances such as high or low reflection in the UV range, high or low reflection in the visible range, multiangular efficiency in reflection, e.g., low visual reflection of visible light over a wide range of angles of incidence, by using the inventive interferential coating on one main face of the substrate, or identical or different inventive interferential coatings on both faces of the substrate.

In each of these embodiments, the total number of layers in the interferential coating, preferably an asymmetric antireflection coating, is preferably higher than or equal to 3, preferably lower than or equal to 7 or 5, and/or the total thickness of the interferential coating (preferably an asymmetric mirror coating) is preferably lower than 1 micrometer, more preferably lower than or equal to 800 nm or 500 nm.

It is possible to design interferential coatings without limitation as regards their hue angle (h), which relates to the residual color displayed by said interferential coating (color of the reflected light), and preferably ranges from 40° to 355°, more preferably from 100° to 300°. In some embodiments, the optical article has a hue angle (h) ranging from 240° to 300°, preferably from 250° to 290°, more preferably from 260° to 280°, thus resulting in a perceived residual reflected color blue to violet, preferably close to violet. In another embodiment, the optical article has a hue angle (h) higher than or equal to 135°, more preferably higher than or equal to 140° and better ranging from 140° to 160°, thus resulting in an interferential coating having a green reflection. In another embodiment, the optical article has a hue angle (h) ranging from 40° to 90°, preferably 50° to 90°, better 50° to 70°, thus resulting in an interferential coating having a gold reflection.

The colorimetric coefficients of the lenses of the invention have a good robustness. The robustness σh of the optical article, defined in WO 2015/000534, is satisfactory, and preferably lower than or equal to 8°, more preferably lower than or equal to 7.5°, for a hue angle h corresponding to green.

The invention further relates to a method of manufacturing an optical article such as described hereabove, comprising:

- providing an optical lens comprising a substrate having a front main face and a rear main face,
- depositing onto at least one main face of the substrate and a multilayer interferential coating defining an asymmetric mirror effect comprising a stack of at least one high refractive index layer having a refractive index higher than 1.55 and at least one low refractive index layer having a refractive index of 1.55 or less, at least one of the layers of the multilayer interferential coating being a sub-stoichiometric light-absorbing layer.

In one embodiment, the present optical article is prepared by forming on the substrate a primer coating and/or an abrasion- and/or scratch-resistant coating in a first manufacturing site, while the other coatings are formed in a second manufacturing site.

The following examples illustrate the present invention in a more detailed, but non-limiting manner. Unless stated otherwise, all thicknesses disclosed in the present application relate to physical thicknesses. The percentages given in the tables are weight percentages. Unless otherwise specified, the refractive indexes referred to in the present invention are expressed at 20-25°C for a wavelength of 550 nm.

EXAMPLES

6. General procedures

The articles employed in the examples comprised a 65 mm-diameter polythiourethane MR8® lens substrate (from Mitsui Toatsu Chemicals Inc., refractive index = 1.59), with an optical power of -2.00 diopters when indicated, and no optical power at all when indicated "piano" and a thickness of 1.2 mm, coated on its convex or front main face with the impact resistant primer coating disclosed in the experimental part of WO 2010/109154 modified to have a refractive index of 1.6 by addition of high refractive index colloids, and the abrasion- and scratch-resistant coating (hard coat) disclosed in example 3 of EP 0614957 (modified to have a refractive index of 1.6 rather than 1.5 by adding high refractive index colloids), asymmetric mirror according to the invention on the front face, and the antifouling coating disclosed in the experimental section of patent application WO 2010/109154, i.e., by evaporation under vacuum of the Optool DSX® compound marketed by Daikin Industries (thickness: from 2 to 5 nm). Said articles have on the concave or rear main face the same stack, except the asymmetric mirror that is replaced by an absorbing antireflective coating or transparent antireflective coating.

The various layers deposited without heating the substrates, by vacuum evaporation, optionally assisted (IAD) during the deposition by a beam of oxygen and possibly argon ions, when specified (evaporation source: electron gun), and optionally under pressure regulation by supplying (passive) $O_2$ gas or gas mixtures $O_2/Ar$, $N_2/Ar$ into the chamber, where indicated.

The vacuum evaporation device that made it possible to deposit the various antireflective layers was a vacuum coater Syrus3 from Bulher Leybold Optics having two systems for evaporating materials, an electron gun evaporation system, a thermal evaporator (Joule-effect evaporation system), and a Mark 2 ion gun from Veeco for use in the preliminary phase of preparation of the surface of the substrate by argon ion bombardment (IPC) and in the ion-assisted deposition (IAD) of the layers.

2. Preparation of the optical articles

The lenses were placed on a carrousel provided with circular openings intended to accommodate the lenses to be treated, the concave side facing the evaporation sources and the ion gun.

The method for producing optical articles comprises introducing the lens substrate provided with the primer and abrasion-resistant coatings into a vacuum deposition chamber, conducting a pumping step until a high vacuum was created, followed by an ion gun conditioning step (IGC, such as disclosed in FR 2957454, $3.5 \times 10^{-5}$ mBar as starting pressure, 140 V, 3.5 A, argon, 60 seconds), a substrate surface activation step using a bombardment with an argon ion beam (IPC) with a starting pressure of $5.10^{-4}$ mBar (the ion gun was set to 1.8 A, 100 V, 60 seconds), stopping the ionic irradiation, and then successively evaporating the required number of layers coating layers and antifouling coating) at a rate ranging from 0.4 to 3 nm/s, and lastly a ventilation step.

Forming an asymmetric mirror according to the invention comprises for example a deposition step of the interferential layers including HI layers ($ZrO_2$ at a rate of 2 nm/s and $SnO_2$ layers at a rate: 1 nm/s, SiOx or SiNx at a rate of 1-2 nm/s with respectively a gas flowrate ratio of $O_2/Ar$ equal to 0.2 or $N_2/Ar$ equal to 0.2, 0.1, and 0.05 as indicated in table 1 and 2) and LI layers ($SiO_2$ at a rate of 2 nm/s), and lastly a deposition step of an Optool DSX® layer at a rate of 0.4 nm/s, until the required predetermined thickness/transmission factor of the layer is reached.

Forming an antireflection stack of the light visible absorbing type (AR1 or AR2) comprises for example a deposition step of the antireflective layers including HI layers (SiOx or SiNx at a rate of 1-2 nm/s with respectively a gas flowrate ratio of $O_2/Ar$ equal to 0.2 or $N_2/Ar$ equal to 0.2, 0.15, and 0.05 as indicated in table 3) and LI layers ($SiO_2$ at a rate of 2 nm/s), and lastly a deposition step of an Optool DSX® layer at a rate of 0.4 nm/s , until the required predetermined thickness/transmission factor of the layer is reached.

Forming an antireflection stack of the transparent type (Conventional Transparent AR) comprises for example a deposition step of a $SiO_2$ layer at a rate of 2 nm/s, a deposition step of a $ZrO_2$ layer at a rate of 1 nm/s under an $O_2$ pressure of $7.0 \times 10^{-5}$ mBar, a surface activation step of this $ZrO_2$ layer using an argon ion beam for 30 seconds (same treatment as IPC already conducted directly on the substrate), a deposition step of a $SiO_2$ sub-layer at a rate of 3 nm/s optionally under an $O_2$ atmosphere (at a pressure of $5 \times 10^{-5}$ mBar), a surface activation step of the sub-layer using an argon ion beam for 30 seconds (same treatment as IPC already conducted directly on the substrate), and the deposition of the antireflective layers including HI layers ($ZrO_2$ at a rate of 2 nm/s and $SnO_2$ layers at a rate: 1 nm/s) and LI layers ($SiO_2$ at a rate of 2 nm/s), and lastly a deposition step of an Optool DSX® layer at a rate of 0.4 nm/s.

The deposition of $ZrO_2$ layers was done under gas supply ($O_2$, under a pressure of $7.5 \times 10^{-5}$ mBar). The deposition of the thin $SnO_2$ electrically conductive layers was done with an oxygen ion assistance (ion gun: 2 A, 120 V).

3. Innovative Asymmetric and comparative mirror examples

Table 1 below shows five examples of asymmetric mirror stacks consisting of alternating $SiO_2$, and absorptive SiNx layers with specific thickness and layer numbers and comparative examples 1 and 2 (comparative example 1 comprising in addition a SiN layer.

| (nm) | example 1 | example 2 | example 3 | example 4 | example 5 | comparative 2 |
|---|---|---|---|---|---|---|
| SiO2 | 10.2 | - | 126.9 | 83.5 | - | 36.5 |
| abs SiNx (0.15) | 76.5 | 69.5 | 33.3 | 7.1 | - | 36.2 |
| SiO2 | 54.9 | 9.6 | 47.0 | 76.4 | 44.7 | 83.9 |

| | example 1 | example 2 | example 3 | example 4 | example 5 | comparative 2 |
|---|---|---|---|---|---|---|
| abs SiNx (0.15) | 104.8 | 117.9 | 111.2 | 117.9 | 93.2 | 52.2 |
| SiO2 | 44.7 | 41.3 | 41.3 | 40.6 | 44.9 | 37.6 |
| Abs SiNx (0.15) | 9.4 | 11.0 | 10.0 | 12.0 | 3.9 | 22.8 |
| HC 1.6 | | | | | | |

| | comparative 1 |
|---|---|
| SiO2 | 113.5 |
| Abs SiOx (0.2) | 10.0 |
| SiO2 | 147.0 |
| SiN | 143.0 |
| abs SiNx (0.2) | 260.0 |
| HC 1.5 | |

| (nm) | example 8 |
|---|---|
| SiO2 | 5 |
| SiN | 49,19 |
| SiO2 | 54,3 |
| Abs SiNx (0.15) | 19,38 |
| SiO2 | 17,29 |
| SiN | 55,97 |
| HC1.6 | |

*Table 1 Examples 1-5 and 8 of asymmetric mirror according to the invention with only substoichiometric layer, comparative examples 1 & 2*

Table 2 below shows two examples of asymmetric mirror stacks according to the invention consisting respectively of $SiO_2$, $ZrO_2$, and absorptive SiNx and Al layers, and $SiO_2$, $ZrO_2$, and absorptive SiOx and Cr layers.

*Table 2 Examples 6&7 of asymmetric mirror according to the invention with both substoichiometric and additional metal layer*

| (nm) | example 6 |
|---|---|
| ZrO2 | 49.6 |
| Al | 6.5 |
| ZrO2 | 59.9 |
| SiO2 | 119.8 |
| abs SiNx (0.15) | 92.5 |
| ZrO2 | 58.9 |
| HC | |

| (nm) | example 7 |
|---|---|
| SiO2 | 6.9 |
| Cr | 9.8 |
| ZrO2 | 64.4 |
| SiO2 | 94.6 |
| abs SiOx (0.15) | 118.0 |
| SiO2 | 17.9 |
| ZrO2 | 40.7 |
| HC | |

In Table 1 and 2, light absorptive SiOx or SiNx layers were deposited with a gas flowrate ratio of $O_2$/Ar equal to 0.2, and 0.15 or $N_2$/Ar equal to 0.2, and 0.15 (as indicated in brackets in said tables), respectively.

4. Antireflective coating examples

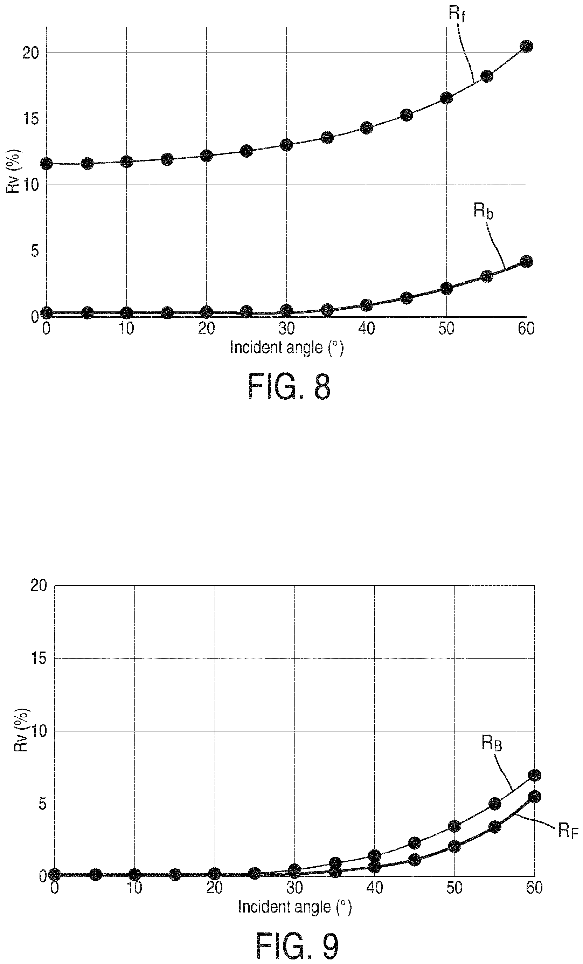

Table 3 below shows three examples of antireflective stacks consisting respectively of a conventional and transparent AR constituted with SiO2, ZrO2, SnO2 and no visible light absorptive layer, and two visible light absorptive antireflective coatings constituted by SiO2 and absorptive SiOx layers for so-called AR1, and by SiO2 and absorptive SiNx layers for so-called AR2. Figure 9 shows the very low Rf and Rb of AR2 (almost 0% for incident angles between 0 and 30° and below 2.5% for incident angles between 0 and 50°.

| (Conventional Transparent AR) | | | Absorptive_AR-1 | | | Absorptive_AR-2 | |
|---|---|---|---|---|---|---|---|
| Sapphire | | | | | | | |
| SiO2 | 83.1 nm | | SiO2 | 77.5 nm | | SiO2 | 83.6 nm |
| SnO2 | 6.5 nm | | Absorptive SiOx | 86.4 nm | | Absorptive SiNx | 16.3 nm |
| ZrO2 | 100.6 nm | | SiO2 | 159.3 nm | | SiO2 | 25.5 nm |
| SiO2 | 36.2 nm | | Absorptive SiOx | 101.9 nm | | Absorptive SiNx | 41.1 nm |
| ZrO2 | 14.0 nm | | HC | | | SiO2 | 40.7 nm |
| SiO2 Underlayer | 84.0 nm | | | | | Absorptive SiNx | 12.0 nm |
| ZrO2 | 9.1 nm | | | | | HC | |
| SiO2 | 38.8 nm | | | | | | |
| HC | | | | | | | |

| h* | 265° | | h* | 330° | | h* | 249° |
|---|---|---|---|---|---|---|---|
| C* | 14,6 | | C* | 15,7 | | C* | 1,0 |
| Rv | 0,38% | | Rv | 0,28% | | Rv | 0,13% |
| Tv | 99,62% | | Tv | 62,00% | | Tv | 34,68% |

*Table 3 Examples of antireflective coatings: conventional transparent, absorptive AR1 and absorptive AR2*

In Table 3, light absorptive SiOx or SiNx layers were deposited with a gas flowrate ratio of $O_2$/Ar equal to 0.2 or $N_2$/Ar equal to 0.15, respectively.

5. Testing methods

The following test procedures were used to evaluate the optical articles prepared according to the present invention. Several samples for each system were prepared for measurements and the reported data were calculated with the average of the different samples.

Colorimetric measurements (in reflection) of the face coated with the stack of the invention: reflection factor Rv, hue angle h and chroma C* in the international colorimetric CIE (L*, a*, b*) space were carried out with a Zeiss spectrophotometer, taking into account the standard illuminant D65, and the standard observer 10° (for h and C*). They are provided for an angle of incidence of 15°.

The light transmission factor in the visible spectrum Tv was measured in transmission mode from a wearer's view angle using a Cary 4000 spectrophotometer from Hunter, with the back (concave) side of the lens (2 mm thickness at the center) facing the detector and light incoming on the front side of the lens. Tv was measured under D65 illumination conditions (daylight).

The thickness of the layers was controlled by means of a quartz microbalance.

In the present disclosure, LI materials can be defined as materials having a refractive index at a wavelength of 550 nm below 1.60, sometimes below 1.55, and HI materials can be defined as materials having a refractive index at 550 nm above 1.6, sometimes above 1.65.

For all the examples of AR/Mirror stacks listed in below Tables 1, 2, 3 while the stoichiometric SiN which has a refractive index of 1.915 at 550 nm, is a HI material, and sub-stoichiometric SiOx and SiNx are high index materials. All the sub-stoichiometric materials in the examples of stacks in Table 1, 2, 3, which have a refractive index above 2.0 at 550 nm, are HI materials.

The stoichiometric SiO2, which has a refractive index of 1.462 at 550 nm, is an LI material.

6. Optical article according to the invention

From the above defined examples 1-7 of asymmetric mirrors and three antireflective coatings, either transparent or visible light absorbing, several embodiments of optical article according to the invention can be defined.

7. Results

7.1 Results obtained for asymmetric mirror according to the invention

The forward and backward reflection factors Rf1, Rb2 and the reflection color chroma c* and hue h*, the transmission factors, of the asymmetric mirror coatings from examples 1-7 have been fixed to predetermined values to define asymmetric mirror behaviour, with different visible color domains, such as blue, green, gold, when viewing from the front face, and unperceivable reflection when viewing from the front face of said asymmetric mirror coating.

As is evident from the different figures dedicated to asymmetric mirror coating reflection spectrum, the examples of mirror according to the invention have the required antireflective behaviour when viewing from the back side, and highly reflective behaviour when viewing from the front side:

- Figure 3: Example 1: very strong Rf (between 27 and 34%) for incident angles between 0 and 60°, very low Rb (below 2.5% for incident angles between 0 and 60°, and below 1.5% for incident angles between 0 and 50°

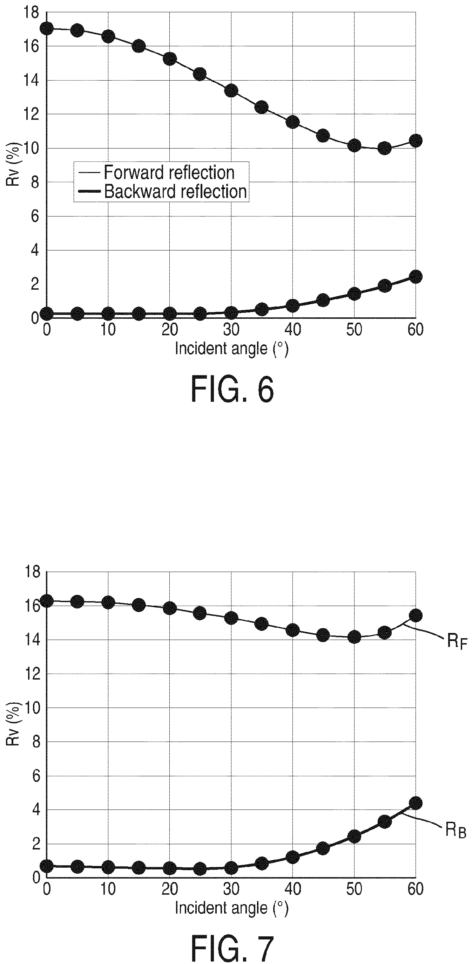

- Figure 6: Example 3: strong Rf (between 10 and 18%) for incident angles between 0 and 60°, very low Rb (below 2.5% for incident angles between 0 and 60°, and below 2% for incident angles between 0 and 50°
- Figure 7: Example 4: strong Rf (between 13 and 17%) for incident angles between 0 and 60°, very low Rb (below 2.5% for incident angles between 0 and 50°, and below 2% for incident angles between 0 and 45°
- Figure 8: Example 5: strong Rf (between 11 and 25%) for incident angles between 0 and 60°, very low Rb (below 2.5% for incident angles between 0 and 55°, and below 2% for incident angles between 0 and 50°
- Figure 12a: Example 6: very strong Rf (between 15 and 40% for wavelengths comprised between 380 and 780 nm) for an incident angle of 15°, very low Rb for an incident angle of 15°
- Figure 12b: Example 7: very very strong Rf (between 40 and 60% for wavelengths comprised between 380 and 780 nm) for an incident angle of 15°, very low Rb for an incident angle of 15°

On the contrary, as is evident from the figures 2 and 4 disclosing the reflectance of above comparative mirror examples 1 and 2, said comparative mirrors, even if comprising sub-stoichiometric absorbing layers, were not designed to show the asymmetric mirror effect, and have unwanted high backward reflection (above 10% at all incident angles between 0 to 50° for comparative example 1, and above 5% at all incident angles between 0 to 50° for comparative example 2 showing unwanted high reflective properties when viewing from the back side.

5.2 Results obtained for different embodiments of an optical article according to the invention

The above examples 1-8 were each deposited on the front face of MR8® substrates and each opposite rear face of said substrates was coated with the above described transparent antireflective coating. The below h*, c*, Rf, at 15°, Rb between 0 and 50°, Rf/Rb ratio and Tv at 15° were obtained and are listed in the below table 4.

| Cx: Absorptive Mirror / Cc: Conventional transparent AR | | | | | | | | | | | | | | | |
| | h* 15° | C* 15° | RF (%) 15° | RB (%) | | | | | | | | | | | RF/RB 15° | TV (%) 15° |
| | | | | 0° | 5° | 10° | 15° | 20° | 25° | 30° | 35° | 40° | 45° | 50° | | |
| Example-1 | 35 | 19 | 27,99 | 1,33 | 1,32 | 1,30 | 1,27 | 1,23 | 1,21 | 1,21 | 1,27 | 1,42 | 1,72 | 2,27 | 22 | 6 |
| Example-2 | 153 | 1 | 30,49 | 0,85 | 0,84 | 0,81 | 0,77 | 0,72 | 0,68 | 0,67 | 0,72 | 0,87 | 1,19 | 1,76 | 40 | 7 |
| Example-3 | 260 | 35 | 16,00 | 0,68 | 0,67 | 0,65 | 0,62 | 0,58 | 0,57 | 0,58 | 0,66 | 0,83 | 1,17 | 1,78 | 26 | 11 |
| Example-4 | 135 | 15 | 15,99 | 1,05 | 1,04 | 1,00 | 0,95 | 0,90 | 0,85 | 0,84 | 0,89 | 1,05 | 1,37 | 1,97 | 17 | 14 |
| Example-5 | 293 | 3 | 12,07 | 0,79 | 0,78 | 0,76 | 0,73 | 0,70 | 0,69 | 0,71 | 0,79 | 0,97 | 1,32 | 1,94 | 17 | 25 |
| Example-6 | 267 | 22 | 20,55 | 0,90 | 0,90 | 0,88 | 0,86 | 0,86 | 0,87 | 0,94 | 1,10 | 1,38 | 1,87 | 2,65 | 24 | 24 |
| Example-7 | 167 | 7 | 56,17 | 0,88 | 0,87 | 0,84 | 0,81 | 0,79 | 0,80 | 0,88 | 1,08 | 1,43 | 2,01 | 2,92 | 69 | 16 |
| Example- 8 | 256 | 38 | 15,03 | 1,03 | 1,01 | 0,95 | 0,87 | 0,78 | 0,71 | 0,70 | 0,81 | 1,09 | 1,66 | 2,66 | 17 | 64 |

*Table 4 Results obtained for an optical article combining asymmetric mirror examples 1-8 to a transparent antireflective coating*

The above examples 1-8 were each deposited on the front face of MR8® substrates and each opposite rear face of said substrates was coated with the above described absorbing antireflective coating AR1. The below h*, c*, Rf, at 15°, Rb between 0 and 50°, Rf/Rb ratio and Tv at 15° were obtained and are listed in the below table 5.

| Cx: Absorptive Mirror / Cc: Absorptive AR-1 | | | | | | | | | | | | | | | | |
| | h* 15° | C* 15° | RF (%) 15° | RB (%) | | | | | | | | | | | RF/RB 15° | TV (%) 15° |
| | | | | 0° | 5° | 10° | 15° | 20° | 25° | 30° | 35° | 40° | 45° | 50° | | |
| Example-1 | 35 | 19 | 27,99 | 0,72 | 0,72 | 0,72 | 0,73 | 0,76 | 0,83 | 0,96 | 1,19 | 1,57 | 2,16 | 3,06 | 38 | 4 |
| Example-2 | 152 | 1 | 30,50 | 0,44 | 0,44 | 0,44 | 0,44 | 0,47 | 0,53 | 0,66 | 0,90 | 1,29 | 1,90 | 2,83 | 69 | 5 |
| Example-3 | 260 | 35 | 16,02 | 0,37 | 0,37 | 0,37 | 0,38 | 0,41 | 0,48 | 0,62 | 0,87 | 1,26 | 1,88 | 2,83 | 42 | 8 |
| Example-4 | 135 | 15 | 16,01 | 0,49 | 0,49 | 0,49 | 0,50 | 0,52 | 0,59 | 0,72 | 0,96 | 1,35 | 1,97 | 2,92 | 32 | 9 |
| Example-5 | 299 | 3 | 12,14 | 0,41 | 0,41 | 0,42 | 0,43 | 0,46 | 0,54 | 0,68 | 0,93 | 1,33 | 1,95 | 2,90 | 28 | 17 |
| Example-6 | 268 | 22 | 20,60 | 0,47 | 0,47 | 0,47 | 0,49 | 0,53 | 0,61 | 0,77 | 1,05 | 1,48 | 2,16 | 3,16 | 42 | 16 |
| Example-7 | 167 | 7 | 56,19 | 0,41 | 0,41 | 0,41 | 0,43 | 0,48 | 0,58 | 0,76 | 1,07 | 1,55 | 2,28 | 3,34 | 131 | 10 |
| Example- 8 | 257 | 38 | 15,39 | 0,46 | 0,45 | 0,44 | 0,43 | 0,45 | 0,51 | 0,64 | 0,91 | 1,36 | 2,09 | 3,19 | 36 | 41 |

Table 5 Results obtained for an optical article combining asymmetric mirror examples 1-8 to an absorbing antireflective coating AR1

The above examples 1-8 were each deposited on the front face of MR8® substrates and each opposite rear face of said substrates was coated with the above described absorbing antireflective coating AR2. The below h*, c*, Rf, at 15°, Rb between 0 and 50°, Rf/Rb ratio and Tv at 15° were obtained and are listed in the below table 6.

| Cx: Absorptive Mirror / Cc: Absorptive AR-2 | | | | | | | | | | | | | | | | |
| | h* 15° | C* 15° | RF (%) 15° | RB (%) | | | | | | | | | | | RF/RB 15° | TV (%) 15° |
| | | | | 0° | 5° | 10° | 15° | 20° | 25° | 30° | 35° | 40° | 45° | 50° | | |
| Example-1 | 35 | 19 | 27,99 | 0,35 | 0,35 | 0,34 | 0,33 | 0,33 | 0,36 | 0,44 | 0,60 | 0,89 | 1,38 | 2,19 | 85 | 3 |
| Example-2 | 153 | 1 | 30,49 | 0,23 | 0,23 | 0,22 | 0,21 | 0,20 | 0,23 | 0,31 | 0,47 | 0,76 | 1,26 | 2,08 | 149 | 3 |
| Example-3 | 260 | 35 | 16,00 | 0,20 | 0,20 | 0,19 | 0,18 | 0,18 | 0,20 | 0,28 | 0,45 | 0,74 | 1,25 | 2,07 | 90 | 5 |
| Example-4 | 135 | 15 | 15,99 | 0,24 | 0,23 | 0,22 | 0,21 | 0,21 | 0,24 | 0,31 | 0,47 | 0,77 | 1,27 | 2,09 | 76 | 6 |
| Example-5 | 293 | 3 | 12,06 | 0,22 | 0,22 | 0,21 | 0,20 | 0,20 | 0,23 | 0,31 | 0,47 | 0,77 | 1,28 | 2,10 | 61 | 10 |
| Example-6 | 268 | 22 | 20,54 | 0,24 | 0,23 | 0,22 | 0,21 | 0,21 | 0,25 | 0,33 | 0,51 | 0,82 | 1,35 | 2,20 | 97 | 9 |
| Example-7 | 167 | 7 | 56,16 | 0,21 | 0,21 | 0,20 | 0,19 | 0,20 | 0,24 | 0,34 | 0,53 | 0,87 | 1,42 | 2,30 | 291 | 6 |
| Example- 8 | 256 | 38 | 14,94 | 0,22 | 0,21 | 0,2 | 0,18 | 0,18 | 0,2 | 0,28 | 0,45 | 0,77 | 1,32 | 2,2 | 83 | 24 |

Table 6 Results obtained for an optical article combining asymmetric mirror examples 1-8 to an absorbing antireflective coating AR2

As is evident from the above tables 4 to 6, and from the figures 4, 5, 10, 11 and 21, very low Rb are obtained and high or very high Rf are obtained for all of the optical articles defined as such:

- Figure 4: Some prototypes of Example-2 and Comparative-2 mirror coatings are prepared on MR8/HC1.6 substrates. The convex surface of the lenses are coated with the corresponding mirror coatings, and the concave surface of the lenses are coated with conventional transparent AR coating (or any other conventional AR, such as SiN/SiO2, etc.) by e-beam evaporation. In order to characterize the unique asymmetric reflection feature, the mirror coatings are applied on piano MR8 substrates and SMR measurements are conducted from both Cx and Cc surfaces. Actually, the measured reflection is the total reflection from both surfaces, as schematically shown in Fig.1. Fig.4 shows the SMR reflection spectra measured at 15° on Cx and Cc surfaces of piano MR8 prototypes with Example-2 and Comparative-2 mirror coatings. It is noted that the forward reflection from Cx surface Rf of both mirror coating samples is very strong. The backward reflection from Cc surface Rb of the comparative (conventional) mirror coating is quite high, but the reflection from Cc surface of the Example-2 (asymmetric) mirror coating is very low (0.77% at 15° and below 2% between 0° and 50° according to the table 4)
- Figure 5 shows the measured Rf, Rb at different incident angles on Cx and Cc surfaces of Example-2 and Comparative-2 mirror coating prototypes deposited on front or Cx side of piano MR8® while the Cc or rear side is coated with a transparent AR coating. It is noted that the forward Rf values (measured from Cx or front surface) of both mirror coating samples are very high at different incident angles (more than 30%). The backward Rb (measured from rear Cc surface) of the comparative (conventional) mirror coating varies between 4-11.5% at incident angles of 0°-60°. The backward Rb of the Example-2 (asymmetric) mirror coating is on the contrary very low (below 1.5% at incident angles of 0°-45°). Compared to the conventional mirror coating, the significantly lower backward Rb of the asymmetric mirror coating is promising for reducing the annoying back-reflection and ghost image, particularly when the mirror coatings are applied on prescription lenses. Indeed, from two photographies taken for two prototypes of the same non piano MR8® substrate of a spherical power of -2.00D, coated with respectively the Comparative-2 absorptive mirror coating and Example-2 asymmetric mirror coating, strong ghost images can be observed through the conventional mirror coating, while the ghost image through the asymmetric mirror coating is significantly reduced or even cancelled,

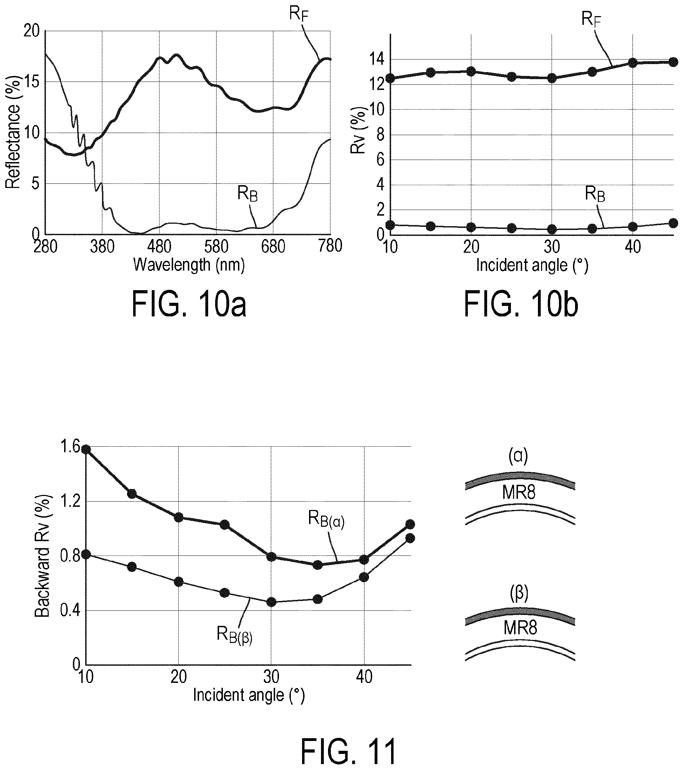

- Figure 10 shows the measured Rf, Rb at different incident angles on Cx and Cc surfaces of Example-5 mirror coating with silver reflection color deposited on front or Cx side of piano MR8® while the Cc or rear side is coated with an absorptive AR2 coating. This stack consists of only 4 layers, two absorptive and two transparent. The theoretical forward and backward Rv of this mirror stack is shown in Fig.8. Similar to the other above-mentioned Examples 1-4 asymmetric mirror coatings according to the invention, the forward reflection of this optical article is high while backward reflection is quite low.

- Figure 11 shows the even more lower Rb between 0 and 50°(below 1%) obtained when combining an asymmetric mirror to an absorbing antireflective coating. More precisely, the convex surface of Lens α is coated with Example-2 asymmetric mirror coating and the concave surface of this lens is coated with the conventional transparent AR. For Lens β, convex surface is coated with Example-5 asymmetric mirror coating but its concave surface is coated with the absorptive AR2 coating as shown in Fig.9. The transmittance TvD65 of these two prototypes are similar (10-12 %). The backward Rb of both prototypes are quite low, but Lens β has even lower backward Rb than Lens α. This result can be interpreted that the sub-reflection from Cx surface (i.e. Rb2 on figure 1) of Lens β is partially absorbed by the absorptive AR2 on Concave surface. Therefore, the measured total backward reflection Rb of Lens β is mainly contributed by the sub-reflection from the AR coating on Cc surface (i.e. very low RB1). Both of these prototypes on -2.00D MR8 substrates show no obvious ghost image

- Figure 21 shows low Rb between 0 and 45°(below 1.5%) obtained when combining an asymmetric mirror of the example 8 kind, to an absorbing antireflective coating AR2. Similar to the other above-mentioned Examples asymmetric mirror coatings according to the invention, the forward reflection of this optical article is high (almost 15%) while backward reflection is quite low. The asymmetric mirror according to this example 8, has a higher transmission than the other examples (Tv 60% at 15°), and allows, when combined to a transparent substrate and AR coating, to obtain an optical article of the class 1 (Tv = 64% at 15°).

The obtained optical articles according to the different illustrated examples of the invention, present several interesting optical properties among :

- a forward reflectance Rf, at incident angles lower than 15°, that is above 2.5% (all examples), above 10% (all examples), above 20% (all examples except examples 3-5 whatever the antireflective coating used), above 30% (examples 2 and 7 whatever the antireflective coating used),

- a backward reflectance Rb, at incident angles lower than 15°, that is below 2.5% (all examples whatever the antireflective coating used), preferably below 2% (all examples whatever the antireflective coating used), preferably below 1.5% (all examples whatever the antireflective coating used), preferably below 1% (all examples whatever the antireflective coating used, except example 1 combined to the transparent AR coating), preferably below 0.7% (all examples with AR2, examples 2-7 with AR1, examples 3, 6 & 7 with transparent AR), preferably below 0.6% (all examples with AR2, examples 2-7 with AR1), preferably below 0.5% (all examples with AR2, examples 2-7 with AR1), preferably below 0.4% (all examples with AR2), preferably below 0.3% (examples 2-7 with AR2), preferably below 0.2% (examples 3 and 7 with AR2),

- the ratio between the forward reflectance and the backward reflectance at an incident angle of 15° noted Rf/Rb is equal to or above 10 (all examples whatever the antireflective coating used), preferably above 20 (examples 1-3, 6&7 with transparent AR, all examples with AR1 or AR2), preferably above 30 (examples 2, 7 with transparent AR, all examples with AR1 or AR2)

- the backward reflectance Rb at incident angles between 35° and 45°, is below 2.5% (all examples whatever the antireflective coating used), preferably below 2% (all examples 1-6 with transparent AR, all examples 2-5 with AR1, all examples with AR2), preferably below 1.5% (examples 2-5 with transparent AR, all examples with AR2), preferably below 1.4% (examples 2-3 with transparent AR, examples 1-5 with AR2), preferably below 1.3% (examples 2-5 with AR2)

- the backward reflectance Rb at incident angles between 0° and 45°, is below 2.5% (all examples whatever the antireflective coating used), preferably below 2,3% (all examples whatever the antireflective coating used), preferably below 2.2% (all examples whatever the antireflective coating used except example 7 / AR1), preferably below 2.1% (all examples whatever the antireflective coating used except examples 6&7 / AR1)

- the backward reflectance Rb at incident angles between 35° and 50°, is below 2.5% (examples 1-5 with transparent AR, all examples with AR2), preferably below 2,3% (examples 1-5 with transparent AR, all examples with AR2), preferably below 2.2% (all examples 1-6 with AR2), preferably below 2.1% (all examples 1-5 with AR2)

The structure of asymmetric mirror according to the invention can be defined with at least one of the below considered alone or any combination of them:

- For asymmetric mirror with at least two absorptive layers (either both sub-stoichiometric layers, or one sub-stoichiometric and the other metal layer), at least one of these absorptive layers has a thickness below 20, preferably below 15 nm, more preferably below 10 nm, and preferably the second absorptive layers has a thickness between 60-130 nm, preferably between 80-120 nm, more preferably between 90-120 nm
- For asymmetric mirror with three absorptive layers, the third absorptive layers has a thickness between 5-120 nm, more preferably between 7-80 nm
- For asymmetric mirror with three absorptive sub-stoichiometric layers, at least one of these layers has a thickness below 20, preferably below 15 nm, more preferably below 10 nm
- For asymmetric mirror with at least one absorptive sub-stoichiometric layers, and at least one metal layer, one of said at least one absorptive sub-stoichiometric layer has a thickness above 20, preferably above 40, preferably above 60 preferably above 80 nm, and one of said metal layer has a thickness below 20, preferably below 15 nm, more preferably below 10 nm, and preferably above 5 nm
- The first layer, closest to the substrate is preferably a HI layer
- When both two absorptive layers are sub-stoichiometric layers, the first layer closest to the substrate is preferably a sub-stoichiometric layer
- When the two absorptive layers are one absorptive sub-stoichiometric layers, and one metal layer, the first layer closest to the substrate is preferably a HI layer, neither a metal layer nor a sub-stoichiometric layers, such as ZrO2
- The last layer, farthest from the substrate is either a LI layer such as SiO2 or a HI layer
- The asymmetric mirror stack comprises at least 4 layers, preferably below 10 layers, more preferably below 8 or exactly 8 layers, participating to the asymmetric mirror effect.

As mentioned previously, asymmetric absorptive mirror coatings are developed in this invention. In comparison with the comparative mirror coatings designed with sub-stoichiometric layers but without considering backward reflection, asymmetric mirror coatings can effectively reduce the back-reflection and visibility of ghost image. If the asymmetric mirror coatings on convex surface is combined with an absorptive AR coating on concave surface, back-reflection and visibility of ghost image can be further minimized.

As described above, the transmittance can be controlled, from class 1 to class 4, by the thickness and/or composition of the light absorptive layers and also the asymmetric mirror effect can be used for sunglass applications, since the transmittance of the coated articles can be flexibly controlled from class 1 to class 4 according to European standard NF EN 1836+A1.

Several stacks have been designed using 1 to 3 absorbing layers with visual transmission (Tv) ranging from 3 to 60%. As described above, the transmittance can be controlled, from class 1 to class 4, by the thickness and/or composition of the light absorptive layers of the antireflective absorbing coating when present, and/or thanks to the presence of the asymmetric mirror.

Although representative optical articles, sunglasses and manufacturing methods have been described in detail herein, those skilled in the art will recognize that various substitutions and modifications may be made without departing from the scope of what is described and defined by the appended claims.

Obviously, it is possible to combine several of the prepared coatings of the asymmetric mirror effect and of the antireflective effect as described above, on both main faces of a lens to have cumulative advantages according to the specifications required.

**Claims**

1. An optical article having a base material defining a front and a rear main faces, at least one main face being coated with an interferential multilayer coating comprising a stack of at least one high refractive index layer having a refractive index higher than 1.55 and at least one low refractive index layer having a refractive index of 1.55 or less, the refractive indexes being expressed for a wavelength of 550 nm, such as defining high reflective properties when viewing said article from its front face and antireflective properties when viewing said article from its rear face, called asymmetric mirror, at least one of the layers of the asymmetric mirror being a visible light absorbing sub-stoichiometric inorganic material.

2. An optical article according to the precedent claim, wherein said light absorbing sub-stoichiometric inorganic material comprises a sub-stoichiometric dielectric oxide or nitride materials with an extinction coefficient above or equal to 0.1 .

3. An optical article according to the precedent claim, wherein said light absorbing sub-stoichiometric inorganic material has a thickness below 200 nm, preferably below 150 nm

4. An optical article according to the precedent claim, wherein at least one sub-stoichiometric inorganic material has a thickness below 30 nm, preferably below 20 nm, preferably below 15 nm, more preferably below 10 nm and above 4 nm

5. An optical article according to the precedent claim, wherein said sub-stoichiometric inorganic material comprises SiNx, where x is a predetermined number lower than 1 or SiOx, where x is a predetermined number lower than 2, or SiNxOy, where x and y are predetermined numbers such as x<1-y/2, and y<2(1-x).

6. An optical article according to any one of the precedent claim, wherein at least one of the visible light absorbing layers of the asymmetric mirror is a metal layer having a thickness below 20 nm, preferably below 15 nm, more preferably below 10 nm and above 4 nm

7. An optical article according to the precedent claim, wherein the metal layer is interposed between two low index layers, or between two high index layers, or between one low index layer and one high index layer of the said interferential coating.

8. An optical article according to the precedent claim, wherein said metal layer contains a metal species being at least one of Al, Cr, Ta, Nb, Ti and Zr

9. An optical article according to any one of the previous claim, wherein the front main face is coated with said asymmetric mirror, and the rear main face is coated with an interferential multilayer coating with antireflective properties when viewing said article from its rear face

10. An optical article according to the precedent claim, wherein said interferential multilayer coating with antireflective properties when viewing said article from its rear face is an antireflective coating.

11. An optical article according to the precedent claim, wherein said antireflectictive coating comprises at least one layer of light absorbing material comprises a sub-stoichiometric inorganic material, preferably sub-stoichiometric dielectric oxide or nitride materials, comprising preferably SiNx, where x is a predetermined number lower than 1 or SiOx, where x is a predetermined number lower than 2, or SiNxOy, where x and y are predetermined numbers such as x<1-y/2, and y<2(1-x).

12. An optical article according to any of the preceding claims, comprising:

 - a weighted spectral reflection average over the whole visible spectrum between 380-780 nm for light arriving on the front main face, called forward reflectance Rf, at incident angles lower than 15° that is above 2.5%,
 - and a weighted spectral reflection average over the whole visible spectrum between 380-780 nm for light arriving on the rear main face, called backward reflectance Rb, at incident angles lower than 15°, below 2.5%, preferably below 2%, preferably below 1.5%, preferably below 1%, preferably below 0.7%, preferably below 0.6%, preferably below 0.5%, preferably below 0.4%, preferably below 0.3%, preferably below 0.2%,
 - and wherein the ratio between the forward reflectance and the backward reflectance at an incident angle of 15° noted Rf/Rb is equal or above 10, preferably above 20, preferably above 30

13. An optical article according to the precedent claim, wherein the backward reflectance Rb at incident angles between 35° and 45°, is below 2.5%, preferably below 2%, preferably below 1.5%, preferably below 1.4%, preferably below 1.3%

14. An optical article according to any one of the claims 12 and 13, wherein the backward reflectance Rb at incident angles between 0° and 45°, is below 2.5%, preferably below 2,3%, preferably below 2.2%, preferably below 2.1%

15. An optical article according to any one of the claims 12 to 14, wherein the backward reflectance Rb at incident angles between 35° and 50°, is below 2.5%, preferably below 2,3%, preferably below 2.2%, preferably below 2.1%

FIG. 1

FIG. 2a

FIG. 2b

FIG. 3

FIG. 4

FIG. 5a

FIG. 5b

FIG. 6

FIG. 7

FIG. 8

FIG. 9

FIG. 10a

FIG. 10b

FIG. 11

FIG. 12

Layer deposition $Si+O_2 \rightarrow SiO_2$
$Si+N_2 \rightarrow SiN$

FIG. 13

FIG. 14

FIG. 15

FIG. 16

FIG. 17

FIG. 18

FIG. 19

FIG. 20

FIG. 21

Europäisches
Patentamt

European
Patent Office

Office européen
des brevets

# EUROPEAN SEARCH REPORT

Application Number

EP 21 30 5698

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 99/21048 A1 (SOLA INT HOLDINGS [AU]; YIP BRANDON [AU] ET AL.) 29 April 1999 (1999-04-29) * page 3, lines 21-28; figures 2,3 * * page 4, lines 9-11, 14-22 * * page 5, lines 3-6 * * page 6, lines 24-26 * ----- | 1-15 | INV. G02B1/115 G02B5/22 G02C7/10 |
| Y | US 2005/186482 A1 (MASCHWITZ PETER [US]) 25 August 2005 (2005-08-25) * paragraphs [0004] - [0010], [0025] * ----- | 1-15 | |
| Y | EP 3 457 196 A1 (ESSILOR INT [FR]) 20 March 2019 (2019-03-20) * paragraph [0142]; figure 8 * ----- | 12 | |
| Y | EP 3 627 194 A1 (ESSILOR INT [FR]) 25 March 2020 (2020-03-25) * figure 3 * ----- | 13-15 | |
| A | EP 2 416 183 A1 (TOKAI OPTICAL CO LTD [JP]) 8 February 2012 (2012-02-08) * paragraph [0008] * ----- | 1 | TECHNICAL FIELDS SEARCHED (IPC) G02B G02C |
| A | US 2007/178315 A1 (THOMAS MICHELE [FR] ET AL) 2 August 2007 (2007-08-02) * paragraph [0014] * ----- | 1 | |
| A | EP 3 505 999 A1 (HOYA LENS THAILAND LTD [TH]) 3 July 2019 (2019-07-03) * figures 1,2 * ----- | 1 | |
| A | EP 3 505 998 A1 (HOYA LENS THAILAND LTD [TH]) 3 July 2019 (2019-07-03) * figure 2 * ----- | 1 | |

The present search report has been drawn up for all claims

| Place of search | Date of completion of the search | Examiner |
|---|---|---|
| Munich | 10 November 2021 | Mollenhauer, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 5698

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2021

| Patent document cited in search report | | Publication date | Patent family member(s) | | Publication date |
|---|---|---|---|---|---|
| WO 9921048 | A1 | 29-04-1999 | BR | 9809060 A | 03-10-2000 |
| | | | EP | 1004049 A1 | 31-05-2000 |
| | | | WO | 9921048 A1 | 29-04-1999 |
| US 2005186482 | A1 | 25-08-2005 | AU | 2005216954 A1 | 09-09-2005 |
| | | | CA | 2556730 A1 | 09-09-2005 |
| | | | CN | 1960860 A | 09-05-2007 |
| | | | EP | 1722970 A1 | 22-11-2006 |
| | | | JP | 5329081 B2 | 30-10-2013 |
| | | | JP | 6026101 B2 | 16-11-2016 |
| | | | JP | 2007524132 A | 23-08-2007 |
| | | | JP | 2012093771 A | 17-05-2012 |
| | | | JP | 2016157124 A | 01-09-2016 |
| | | | KR | 20070022009 A | 23-02-2007 |
| | | | KR | 20100040757 A | 20-04-2010 |
| | | | US | 2005186482 A1 | 25-08-2005 |
| | | | US | 2008011408 A1 | 17-01-2008 |
| | | | US | 2009181245 A1 | 16-07-2009 |
| | | | WO | 2005082610 A1 | 09-09-2005 |
| EP 3457196 | A1 | 20-03-2019 | CN | 111108429 A | 05-05-2020 |
| | | | EP | 3457196 A1 | 20-03-2019 |
| | | | US | 2021341760 A1 | 04-11-2021 |
| | | | WO | 2019057751 A1 | 28-03-2019 |
| EP 3627194 | A1 | 25-03-2020 | CN | 112740079 A | 30-04-2021 |
| | | | EP | 3627194 A1 | 25-03-2020 |
| | | | KR | 20210038674 A | 07-04-2021 |
| | | | WO | 2020058186 A1 | 26-03-2020 |
| EP 2416183 | A1 | 08-02-2012 | CN | 102369462 A | 07-03-2012 |
| | | | EP | 2416183 A1 | 08-02-2012 |
| | | | JP | 5266466 B2 | 21-08-2013 |
| | | | JP | 2010243601 A | 28-10-2010 |
| | | | KR | 20120002577 A | 06-01-2012 |
| | | | US | 2012062833 A1 | 15-03-2012 |
| | | | WO | 2010113622 A1 | 07-10-2010 |
| US 2007178315 | A1 | 02-08-2007 | AT | 422060 T | 15-02-2009 |
| | | | EP | 1697770 A1 | 06-09-2006 |
| | | | ES | 2319538 T3 | 08-05-2009 |
| | | | FR | 2864251 A1 | 24-06-2005 |
| | | | JP | 4795969 B2 | 19-10-2011 |
| | | | JP | 2007520738 A | 26-07-2007 |
| | | | US | 2007178315 A1 | 02-08-2007 |
| | | | WO | 2005059603 A1 | 30-06-2005 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 21 30 5698

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2021

| Patent document cited in search report | | Publication date | Patent family member(s) | | Publication date |
|---|---|---|---|---|---|
| EP 3505999 | A1 | 03-07-2019 | AU | 2018334588 A1 | 18-04-2019 |
| | | | CA | 3038083 A1 | 29-03-2019 |
| | | | CN | 109891304 A | 14-06-2019 |
| | | | EP | 3505999 A1 | 03-07-2019 |
| | | | JP | 2019082717 A | 30-05-2019 |
| | | | KR | 20190042646 A | 24-04-2019 |
| | | | US | 2019219842 A1 | 18-07-2019 |
| | | | WO | 2019065985 A1 | 04-04-2019 |
| EP 3505998 | A1 | 03-07-2019 | AU | 2018334589 A1 | 18-04-2019 |
| | | | CA | 3038077 A1 | 29-03-2019 |
| | | | CN | 110073281 A | 30-07-2019 |
| | | | EP | 3505998 A1 | 03-07-2019 |
| | | | JP | 2019082718 A | 30-05-2019 |
| | | | KR | 20190040052 A | 16-04-2019 |
| | | | US | 2019219843 A1 | 18-07-2019 |
| | | | WO | 2019065989 A1 | 04-04-2019 |

EPO FORM P0459

For more details about this annex : see Official Journal of the European Patent Office, No. 12/82

## REFERENCES CITED IN THE DESCRIPTION

### Patent documents cited in the description

- EP 3118658 A
- US 4689387 A
- US 4775733 A
- US 5059673 A
- US 5087758 A
- US 5191055 A
- FR 2943798
- US 2006017011 A
- US 5268781 A
- US 2008206470 A
- JP 63141001 A
- JP 63087223 A
- US 5015523 A
- US 6503631 B
- EP 0404111 A
- US 5316791 A
- EP 0680492 A
- EP 0614957 A
- US 4211823 A
- WO 2012076714 A
- WO 2011080472 A
- WO 2015000534 A
- WO 2010109154 A
- FR 2957454

### Non-patent literature cited in the description

- **LAROUCHE et al.** *Applied Optics,* 2008, vol. 47 (13), C219-C230
- Thin Film Processes'' and ''Thin Film Processes II. Academic Press, 1978